# EUROPEAN PATENT APPLICATION

(11) **EP 2 106 127 A2**
(43) Date of publication of application: **30.09.2009**
(21) Application number: 09155890.8
(22) Date of filing: 23.03.2009
(51) Int. Cl.: H04N 5/232

(54) **Imaging apparatus, control method thereof, and program**

(30) Priority: 24.03.2008 JP 2008075096
(71) Applicant: Sony Corporation, Tokyo 108-0075 (JP)
(72) Inventor: Mizukami, Kenichi, TOKYO 108-0075 (JP)
(74) Representative: Beder, Jens

(57) **Abstract**

An imaging apparatus includes: a layout assistant image storage unit to store multiple layout assistant images representing position and size where an object is to be disposed within an imaging range; an imaging unit to perform imaging of a subject to generate an imaged image; an object detecting unit to detect the object from the imaged image, and the position and size of the object therein; and a display control unit to display one of multiple stored layout assistant images overlaid on the imaged image. If a position difference between the position of an object determined by the displayed layout assistant image, and a size difference between the size of an object determined by the displayed layout assistant image and the size of the detected object within the imaged image, are both within predetermined ranges, a layout assistant image other than that displayed is displayed overlaid on the imaged image.

## Description

### BACKGROUND OF THE INVENTION

### 1. Field of the Invention

The present invention relates to an imaging apparatus, and more specifically, it relates to an imaging apparatus capable of detecting an object such as a person's face or the like, and control method thereof, and a program causing a computer to execute the method.

### 2. Description of the Related Art

Hitherto, imaging apparatuses have come into widespread use which take an image of a subject such as a person, and record an imaged image, such as digital still cameras, digital video cameras, and so for forth. Also, in recent years, there have been imaging apparatuses which detect a person's face, and set various types of imaging parameters based on the detected face. Further, there has been proposed an imaging apparatus which identifies whether or not the detected face is a specific person's face, and informs the photographer of the identified specific person. Taking images by employing such an imaging apparatus allows even a person unaccustomed to handling of an imaging apparatus to record an imaged image including a desired person comparatively good.

Now, for example, in a case of taking images of a person with a famous building as the background at a tourist resort of a travel destination by employing a digital camera, a composition between the famous building and the person thereof becomes an important factor. Therefore, it becomes important to perform shooting while considering the positions and sizes of the building and person within an imaging range, but this can be conceived to be difficult for a person unaccustomed to handling of an imaging apparatus to perform shooting while considering such positions and sizes.

Therefore, for example, there has been proposed an imaging apparatus which obtains target composition data representing the position and size within a frame of a subject to be imaged, compares the position and size of a subject detected from an imaged image and the position and size of the subject represented with the target composition data thereof to calculate these differences, and guide a zoom ratio and orientation to take an image so as to reduce these differences (e.g., see Japanese Unexamined Patent Application Publication No. 2007-259035 (Fig. 1)).

### SUMMARY OF THE INVENTION

According to the above-mentioned related art, in a case where still images are taken, even a person unaccustomed to handling of an imaging apparatus can record imaged images with appropriate compositions.

Now, for example, let us consider a case of taking images of a specific person at a tourist resort of a travel destination by employing a digital video camera. With regard to this case as well, it becomes important to take an image while considering the positions and sizes of between the background of the tourist resort and the specific person within an imaging range. However, in a case where an imaged image is recorded with the composition according to the above-mentioned related art (e.g., the whole body of the specific person), moving images having a similar composition are recorded consecutively. Therefore, in a case of viewing and listening an imaged moving image thus recorded, moving images having a similar composition are reproduced consecutively, and accordingly, there is a possibility that viewer interest may decrease as to the moving image being reproduced according to elapse of reproducing time.

It has been realized that there is a demand to readily record an imaged moving image which attracts viewer interest at the time of viewing and listening.

According to an embodiment of the present invention, an imaging apparatus includes: a layout assistant image storage unit configured to store multiple layout assistant images representing the position and size where an object is to be disposed within an imaging range; an imaging unit configured to perform imaging of a subject to generate an imaged image; an object detecting unit configured to detect the object from the imaged image, and detect the position and size of the object within the imaged image; and a display control unit configured to display a layout assistant image which is one of multiple layout assistant images stored in the layout assistant image storage unit in a manner overlaid on the imaged image, and in a case where a position difference value which is the difference value between the position of an object determined by the displayed layout assistant image, and a size difference value which is the difference value between the size of an object determined by the displayed layout assistant image and the size of the detected object within the imaged image are both within predetermined ranges, display a layout assistant image other than the displayed layout assistant image of multiple layout assistant images stored in the layout assistant image storage unit in a manner overlaid on the imaged image, and the control method thereof, and a program causing a computer to execute the method. Thus, an operation is provided wherein a layout assistant image which is one of the multiple layout assistant images is displayed in a manner overlaid on an imaged image, and in a case where both of the position difference value and size difference value become within predetermined ranges, a layout assistant image other than the displayed layout assistant image of the multiple layout assistant images are displayed in a manner overlaid on the imaged image.

The display control unit may display multiple layout assistant images stored in the layout assistant image storage unit sequentially in accordance with a predetermined order each time the position difference value and the size difference value are both within predetermined ranges. Thus, an operation is provided wherein in a case where both of the position difference value and size difference value become within predetermined ranges, the multiple layout assistant images are displayed sequentially in accordance with a predetermined order.

The imaging apparatus may further include: a specific object identifying unit configured to identify whether or not the detected object is a specific object; with the display control unit displaying a layout assistant image other than the displayed layout assistant image in a manner overlaid on the imaged image in a case where the position difference value and the size difference value which relate to the displayed layout assistant image and the identified specific object are both within predetermined ranges. Thus, an operation is provided wherein in a case where both of the position difference value and size difference value relating to the identified specific object become within predetermined ranges, another layout assistant image is displayed in a manner overlaid on the imaged image.

The imaging apparatus may further include: a specific object marker generating unit configured to generate a specific object marker to be added to the identified specific object based on the position and size of the identified specific object within the imaged image; with the display control unit displaying a layout assistant image which is one of multiple layout assistant images stored in the layout assistant image storage unit, and the generated specific object marker in a manner overlaid on the imaged image. Thus, an operation is provided wherein a specific object marker to be added to a specific object is generated, a layout assistant image which is one of multiple layout assistant images, and the generated specific object marker are displayed in a manner overlaid on the imaged image.

The imaging apparatus may further include: a specific object identifying information storage unit configured to store a plurality of specific object identifying information for identifying an object, for each object; and an operation accepting unit configured to accept a specification operation for specifying at least one object of multiple objects in which the specific object identifying information is stored; with the specific object identifying unit identifying whether or not the detected object is the specific object by employing the specific object identifying information relating to the specified object of a plurality of specific object identifying information stored in the specific object identifying information storage unit. Thus, an operation is provided wherein the specific object identifying information relating to the specified object of a plurality of specific object identifying information is employed to identify whether or not the detected object is the specific object.

The imaging apparatus may further include: a difference value calculating unit configured to calculate the position difference value and size difference value; and an operation assistant image generating unit configured to generate an operation assistant image for modifying at least one of the position and size of the detected object within the imaged image based on the position difference value and size difference value; with the display control unit displaying a layout assistant image of a plurality of layout assistant images stored in the layout assistant image storage unit, and the generated operation assistant image in a manner overlaid on the imaged image. Thus, an operation is provided wherein an operation assistant image is generated, a layout assistant image which is one of multiple layout assistant images, and the generated operation assistant image are displayed in a manner overlaid on the imaged image.

The difference value calculating unit may calculate a horizontal position difference value which is the difference value between the position in the horizontal direction of an object determined by the displayed layout assistant image, and the position in the horizontal direction of the detected object within the imaged image, and a vertical position difference value which is the difference between the position in the vertical direction of an object determined by the displayed layout assistant image, and the position in the vertical direction of the detected object within the imaged image, as the position difference values, and the operation assistant image generating unit may generate a horizontal direction movement instruction image which is the operation assistant image for modifying the position in the horizontal direction of the detected object within the imaged image in a case where the horizontal position difference value exceeds a horizontal threshold, and in a case where the vertical position difference value exceeds a vertical position threshold, generate a vertical direction movement instruction image which is the operation assistant image for modifying the vertical position of the detected object within the imaged image, and in a case where the size difference value exceeds a size threshold, generate a zoom instruction image which is an operation assistant image for modifying the size of the detected object within the imaged image. Thus, an operation is provided wherein in a case where the horizontal position difference value exceeds the horizontal position threshold, a horizontal direction movement instruction image is generated, and in a case where the vertical position difference value exceeds the vertical position threshold, a vertical direction movement instruction image is generated, and in a case where the size difference value exceeds the size threshold, a zoom instruction image is generated.

The display control unit may not display the zoom instruction image in a case where the horizontal position difference value exceeds the horizontal position threshold, or in a case where the vertical position difference value exceeds the vertical position threshold, and in a case where the horizontal position difference value does not exceed the horizontal position threshold, and the vertical position difference value does not exceed the vertical position threshold, and the size difference value exceeds the size threshold, display the zoom instruction image. Thus, an operation is provided wherein in a case where the horizontal position difference value exceeds the horizontal position threshold, or in a case where the vertical position difference value exceeds the vertical position threshold, the zoom instruction image is not displayed, and in a case where the horizontal position difference value does not exceed the horizontal position threshold, and also the vertical position difference value does not exceed the vertical position threshold, and also in a case where the size difference value exceeds the size threshold, the zoom instruction image is displayed.

The imaging apparatus may further include: a zoom lens configured to adjust focal length; and a zoom lens control unit configured to perform control for driving the zoom lens to modify the size of the detected object within the imaged image based on the size difference value. Thus, an operation is provided wherein control for driving the zoom lens is performed to modify the size of the detected object within the imaged image.

The display control unit may display, in a case where the zoom lens is driven by the zoom lens control unit, an operation assistant image to the effect thereof in a manner overlaid on the imaged image. Thus, an operation is provided wherein in a case where the zoom lens is driven, the operation assistant image to the effect thereof is displayed in a manner overlaid on the imaged image.

The zoom lens control unit may perform, in a case where a subject included in the imaged image is enlarged by driving of the zoom lens, control for driving the zoom lens only when the detected object is included in the imaged image after enlargement. Thus, an operation is provided wherein in a case where the subject include in the imaged image is enlarged by driving of the zoom lens, control for driving the zoom lens is performed only when the detected object is included in the imaged image after enlargement.

According to the above-described configurations, an advantage can be had in that an imaged moving image which will attract viewer interest at the time of viewing and listening can be readily recorded.

### BRIEF DESCRIPTION OF THE DRAWINGS

Fig. 1 is a block diagram illustrating a functional configuration example of an imaging apparatus according to an embodiment of the present invention;
Figs. 2A and 2B are diagrams schematically illustrating a case where a specific face specified by a user employing a specific face identifying dictionary stored in a specific face identifying dictionary storage unit according to the embodiment;
Fig. 3 is a diagram schematically illustrating the content stored in an assistant image management table storage unit according to the embodiment;
Figs. 4A through 4C are diagrams illustrating an example of a template image including a layout assistant image stored in the assistant image management table storage unit according to the embodiment;
Fig. 5 is a diagram schematically illustrating the content held in an assistant image display information holding unit according to the embodiment;
Figs. 6A and 6B are diagrams illustrating a display example at the time of setting the assistant image display mode of a display unit according to the embodiment;
Figs. 7a and 7B are diagrams schematically illustrating a difference value calculating method for displaying an operation assistant image, and illustrating a display example of an operation assistant image of the display unit according to the embodiment;
Figs. 8A and 8B are diagrams illustrating a display example relating to the transition of operation assistant image display by a user's operations of the display unit according to the embodiment;
Figs. 9A and 9B are diagrams illustrating a display example at the time of canceling the assistant image display mode of the display unit according to the embodiment;
Figs. 10A and 10B are diagrams illustrating a display example at the time of switching the layout assistant image of the display unit according to the embodiment;
Figs. 11A and 11B are diagrams illustrating a display example relating to the transition of the operation assistant image display of the display unit according to the embodiment;
Figs. 12A and 12B are diagrams illustrating a display example relating to elimination of the operation assistant image by a user's operations of the display unit according to the embodiment;
Figs. 13A and 13B are diagrams illustrating a display example relating to the transition of the operation assistant image display of the display unit according to the embodiment;
Figs. 14A and 14B are diagrams illustrating a display example at the time of switching the layout assistant image of the display unit according to the embodiment;
Fig. 15 is a flowchart illustrating the processing procedure of assistant image display processing by the imaging apparatus according to the embodiment;
Fig. 16 is a flowchart illustrating an operation assistant image display processing procedure of the processing procedure of assistant image display processing by the imaging apparatus according to the embodiment;
Fig. 17 is a flowchart illustrating a layout assistant image updating processing procedure of the processing procedure of assistant image display processing by the imaging apparatus according to the embodiment;
Figs. 18a and 18B are diagrams illustrating a display example relating to the transition of the operation assistant image display of the display unit according to the embodiment;
Figs. 19A and 19B is a diagram illustrating a display example relating to elimination of the operation assistant image by a user's operations of the display unit according to the embodiment;
Fig. 20 is a flowchart illustrating an operation assistant image display processing procedure of the processing procedure of assistant image display processing by the imaging apparatus according to the embodiment;
Fig. 21 is a block diagram illustrating a functional configuration example of an imaging apparatus according to an embodiment of the present invention;
Figs. 22A and 22B are diagrams illustrating an imaged image displayed on the display unit according to the embodiment;
Figs. 23A and 23B are diagrams illustrating a display example relating to the transition of the operation assistant image display of the display unit according to the embodiment;
Figs. 24A and 24B are diagrams illustrating a display example relating to elimination of the operation assistant image by a user's operations of the display unit according to the embodiment;
Fig. 25 is a flowchart illustrating an operation assistant image display processing procedure of the processing procedure of assistant image display processing by the imaging apparatus according to the embodiment;
Fig. 26 is a flowchart illustrating a zoom lens movement processing procedure of the processing procedure of assistant image display processing by the imaging apparatus according to the embodiment; and
Figs. 27A and 27B are diagrams illustrating a display example of the display unit according to the embodiment.

### DESCRIPTION OF THE PREFERRED EMBODIMENTS

Next, embodiments of the present invention will be described in detail with reference to the appended drawings.

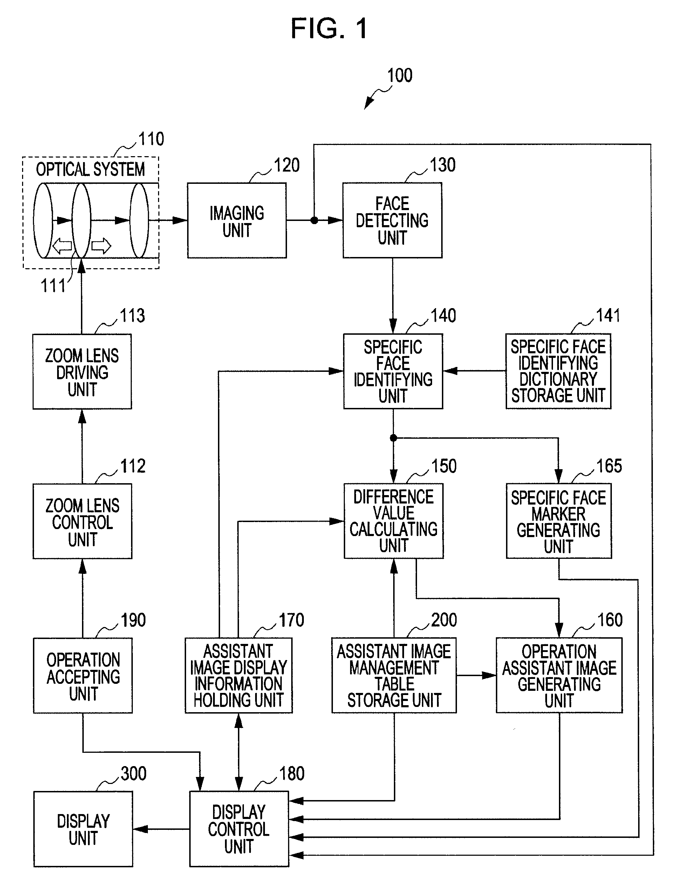

Fig. 1 is a block diagram illustrating a functional configuration example of an imaging apparatus 100 according to an embodiment of the present invention. The imaging apparatus 100 includes an optical system 110, zoom lens control unit 112, zoom lens driving unit 113, imaging unit 120, face detecting unit 130, specific face identifying unit 140, specific face identifying dictionary storage unit 141, difference value calculating unit 150, operation assistant image generating unit 160, specific face marker generating unit 165, assistant image display information holding unit 170, display control unit 180, operation accepting unit 190, assistant image management table storage unit 200, and display unit 300. The imaging apparatus 100 can be realized by, for example, a camcorder (camera and recorder) including a face detecting function and a zoom function.

The optical system 110 is configured of multiple lenses (zoom lens 111, focus lens (not shown), etc.) for condensing light from a subject, and the light input from the subject is supplied to the imaging unit 120 through these lenses and iris (not shown). The zoom lens 111, which is moved to the optical axis direction according to driving of the zoom lens driving unit 113, is a lens for adjusting focal length.
That is to say, the zoom function is realized by the zoom lens 111.

The zoom lens control unit 112 generates a driving control signal for driving the zoom lens driving unit 113 based on the content of a zoom operation accepted by the operation accepting unit 190 to output this driving control signal to the zoom lens driving unit 113.

The zoom lens driving unit 113 is for moving the zoom lens 111 to the optical axis direction according to the driving control signal output from the zoom lens control unit 112.

The imaging unit 120 converts the incident light from a subject to generate an imaged image in accordance with predetermined imaging parameters, and outputs the generated imaged image to the face detecting unit 130 and display control unit 180. That is to say, with the imaging unit 120, an optical image of the subject which is input through the optical system 110 is formed on an imaging surface of an imaging device (not shown), and the imaged signal corresponding to the optical image thus formed is subjected to predetermined signal processing by a signal processing unit (not shown), thereby generating an imaged image.

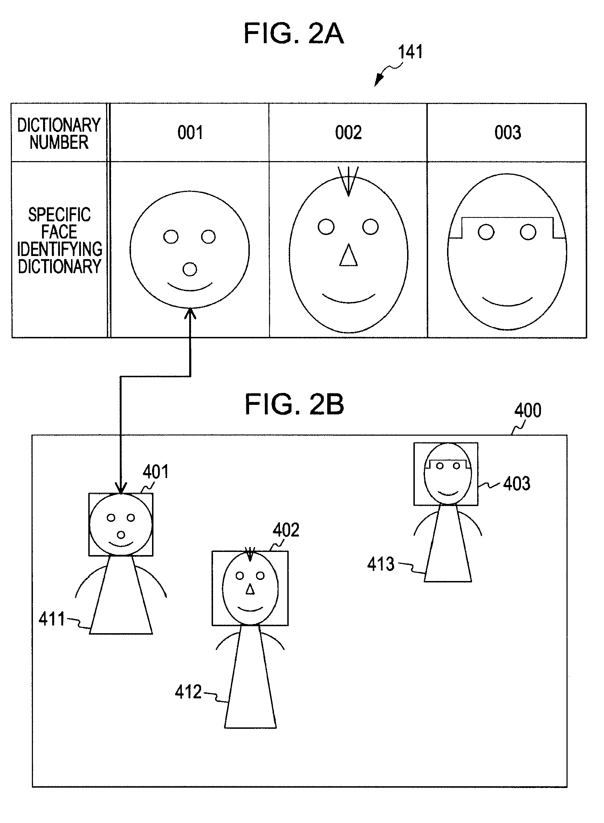

The face detecting unit 130 detects a person's face included in the imaged image output from the imaging unit 120, and outputs face detected information relating to the detected face to the specific face identifying unit 140. As for a face detecting method, for example, a face detecting method by matching between a template in which face brightness distribution information is recorded, and the actual image (e.g., see Japanese Unexamined Patent Application Publication No. 2004-133637), a face detecting method based on a flesh-colored portion included in an imaged image, the feature amount of a human face, or the like, can be employed. Also, the face detected information includes a face image which is a peripheral image thereof including the detected face (e.g., face images 401 through 403 shown in Fig. 2B), and the position and sized of the detected face on the imaged image. The position of the detected face on the imaged image may be set to, for example, the center position of the face image on the imaged image, and the size of the detected face on the imaged image may be set to, for example, the lengths in the horizontal direction and vertical direction of the face image on the imaged image. The area of the detected face is determined with the lengths in the horizontal direction and vertical direction.

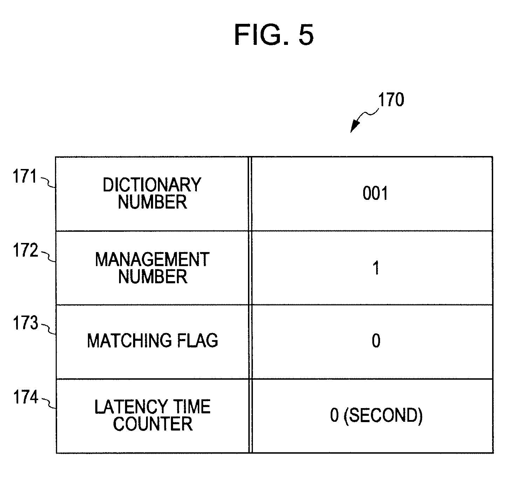

The specific face identifying unit 140 employs a specific face identifying dictionary stored in the specific face identifying dictionary storage unit 141 to identify whether or not the face detected by the face detecting unit 130 is a specific person's face specified by the user (specific face). Also, in the case of identifying that the face detected by the face detecting unit 130 is the specific face, the specific face identifying unit 140 outputs the position and size of this specific face on the imaged image to the difference value calculating unit 150 and specific face marker generating unit 165. Here, the specific face identifying unit 140 employs the specific face identifying dictionary corresponding to the dictionary number held at a dictionary number 171 of the assistant image display information holding unit 170 (shown in Fig. 5) to perform identifying processing.

The specific face identifying dictionary storage unit 141 stores multiple specific face identifying dictionaries employed for specific face identifying processing by the specific face identifying unit 140 for each specific face, and supplies the stored specific identifying dictionary to the specific face identifying unit 140. Here, as for a specific face identifying method, for example, an identifying method based on the feature amount extracted from a specific person's face image may be employed. Specifically, the feature amount extracted from a specific person's face image is stored in the specific face identifying dictionary storage unit 141 as a specific face identifying dictionary beforehand. Subsequently, feature amount is extracted from the face image detected by the face detecting unit 130, and this extracted feature amount, and the feature amount included in the specific face identifying dictionary are compared, thereby calculating the similarity of these feature quantities. Subsequently, in a case where the calculated similarity exceeds a threshold, the face image thereof is determined as the specific face. Also, as for a specific face identifying method, in addition to the identifying method employing the feature amount of a face image, for example, an identifying method for performing identifying processing by an identifier employing the difference value between the brightness values of two points on a face image serving as an object of determination, or the like may be employed.

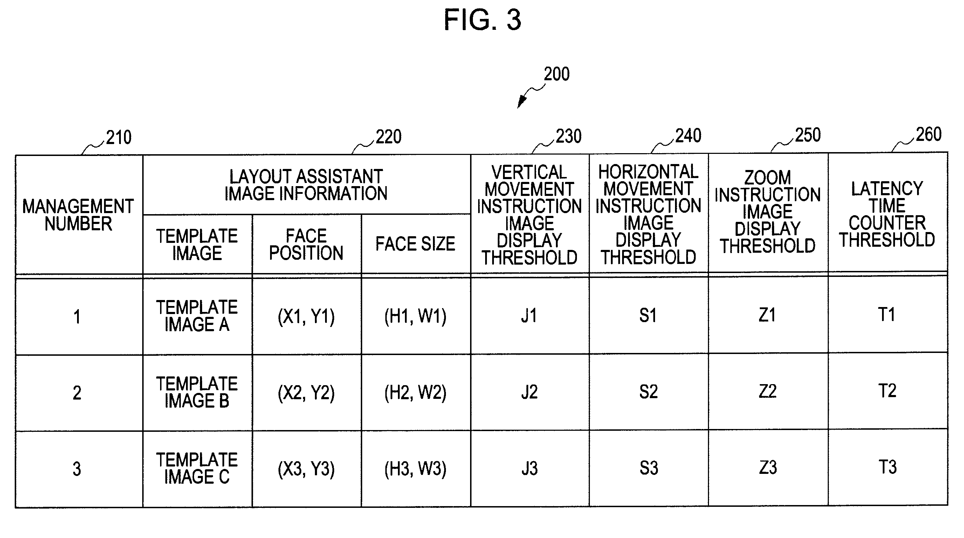

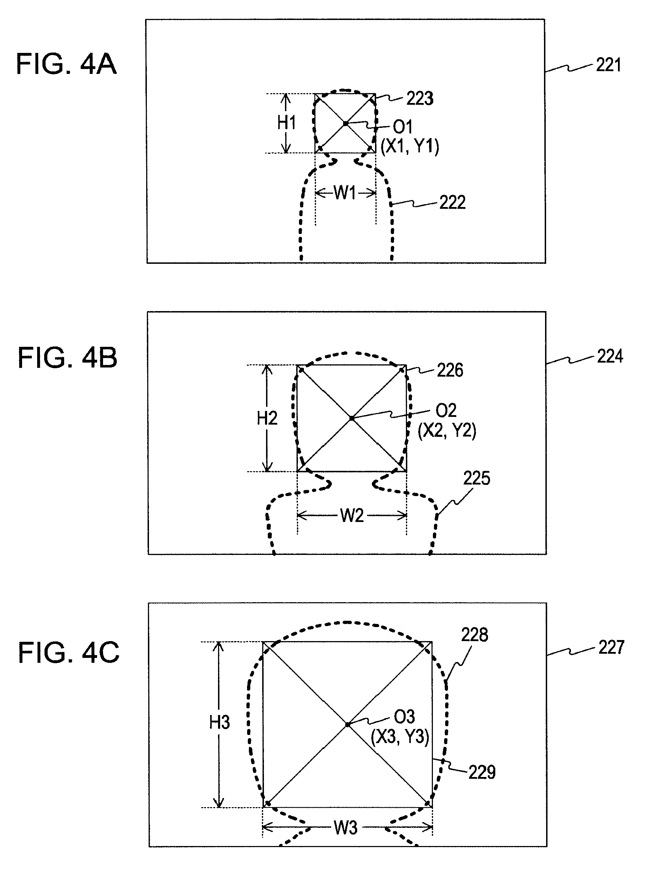

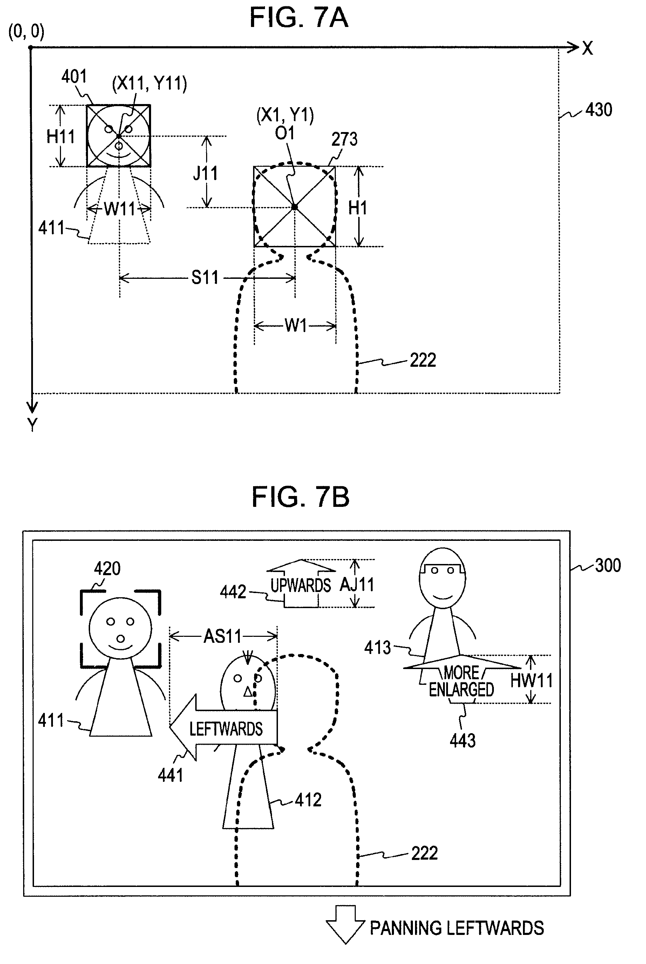

The assistant image management table storage unit 200 stores each piece of information for displaying a layout assistant image and operation assistant image on the display unit 300, and supplies the stored each piece of information to the difference value calculating unit 150, operation assistant image generating unit 160, and display control unit 180. Here, layout assistant images are human model images representing the position and size where the specific face specified by the user is to be disposed within the imaging range, and for example, the layout assistant images 222, 225, and 228 shown in Figs. 4A through 4C are displayed. Also, operation assistant images are images for modifying at least one of the position and size of the specific face specified by the user, and for example, the leftwards movement instruction image 441, upwards movement instruction image 442, and zoom instruction image 443 shown in Fig. 7B are displayed. Note that with regard to the assistant image management table storage unit 200, description will be made in detail with reference to Figs. 3 and 4.

The difference value calculating unit 150 compares the face image of the specific face identified by the specific face identifying unit 140, and the face region determined with the layout assistant image stored in the assistant image management table storage unit 200 to calculate the difference values relating to the position and size, and outputs the calculated respective difference values to the operation assistant image generating unit 160. Specifically, the difference value calculating unit 150 compares the position and size of the face image of the specific face output from the specific face identifying unit 140 on the imaged image, and the position and size of the face region determined with the layout assistant image stored in the assistant image management table storage unit 200, thereby calculating each of the difference value of the positions in the vertical direction, the difference value of the positions in the horizontal direction, and the difference value of the sizes, on the imaged image. Note that the calculating methods of these difference values will be described in detail with reference to Fig. 7A.

The operation assistant image generating unit 160 employs the respective thresholds stored in the assistant image management table storage unit 200 to generate an operation assistant image based on the respective difference values output from the difference value calculating unit 150, and outputs the generated operation assistant image to the display control unit 180. Also, in a case where the difference value output from the difference value calculating unit 150 is at or below the threshold stored in the assistant image management table storage unit 200, the operation assistant image generating unit 160 does not generate the operation assistant image corresponding to the difference value thereof, and outputs that the difference value thereof is at or below the threshold to the display control unit 180. Note that generation of an operation assistant image will be described in detail with reference to Fig. 7B.

The specific face marker generating unit 165 generates a specific face marker indicating the position of the specific face within the imaged image based on the position and size of the face image of the specific image output from the specific face identifying unit 140 on the imaged image, and outputs the generated specific face marker to the display control unit 180.

The assistant image display information holding unit 170 holds each piece of information for displaying layout assistant images or operation assistant images on the display unit 300 sequentially, and supplies the held each piece of information to the specific face identifying unit 140, difference value calculating unit 150, and display control unit 180. Also, each piece of information held at the assistant image display information holding unit 170 is rewritten by the display control unit 180 sequentially. Note that with regard to the assistant image display information holding unit 170, description will be made in detail with reference to Fig. 5.

The display control unit 180 displays the imaged image output from the imaging unit 120 on the display unit 300 sequentially. Also, the display control unit 180 displays the layout assistant images stored in the assistant image management table storage unit 200 in a manner overlaid on the imaged image sequentially in accordance with each piece of information held at the assistant image display information holding unit 170. Further, the display control unit 180 displays the operation assistant image output from the operation assistant image generating unit 160, and the specific face marker output from the specific face marker generating unit 165 in a manner overlaid on the imaged image. The display control unit 180 rewrites the content of the assistant image display information holding unit 170 in accordance with the operation content from the operation accepting unit 190, or the display state of the display unit 300.

The operation accepting unit 190 is an operation accepting unit which accepts the operation content operated by the user, and outputs the signal corresponding to the accepted operation content to the zoom lens control unit 112 or display control unit 180. As for the operation accepting unit 190, operating members are provided in the imaging apparatus 100, for example, such as a W (wide) button and T (tele) button for performing a zoom operation, a specific face specifying button for specifying the specific face, a moving image recording mode setting/canceling button for performing the setting or canceling of the moving image recording mode for enabling recording of a moving image, an assistant image display mode setting/canceling button for performing the setting or canceling of the assistant image display mode for displaying an assistant image at the moving image recording mode, and so forth. Here, in a state in which the W button is pressed, the zoom lens 111 moves to the wide end side (wide-angle side) based on the control of the zoom lens control unit 112, and in a state in which the T button is pressed, the zoom lens 111 moves to the tele end side (telescopic side) based on the control of the zoom lens control unit 112.

The display unit 300 displays each image such as an imaged image or the like based on the control of the display control unit 180. The display unit 300 may be realized, for example, by an LCD (Liquid Crystal Display) or EVF (Electronic View Finder). Note that a portion or the whole of the operation accepting unit 190 may be configured integral with the display unit 300 as a touch panel.

Figs. 2A and 2B are diagrams schematically illustrating a case where the specific face identifying dictionary stored in the specific face identifying dictionary storage unit 141 according to the embodiment of the present invention is employed to identify the specific face specified by the user. Fig. 2A illustrates the specific face identifying dictionary stored in the specific face identifying dictionary storage unit 141, and Fig. 2B illustrates an imaged image 400 generated by the imaging unit 120. The respective specific face identifying dictionaries stored in the specific face identifying dictionary storage unit 141 are determination data for performing the specific face identifying processing by the specific face identifying unit 140 regarding the face image detected by the face detecting unit 130, and Fig. 2A schematically illustrates the face corresponding to each specific face identifying dictionary as a specific face identifying dictionary. Also, Fig. 2A illustrates a case where the specific face identifying dictionaries corresponding to three person's faces are stored in the specific face identifying dictionary storage unit 141 as an example.

As shown in Fig. 2A, a dictionary number for identifying a specific face identifying dictionary is stored in the specific face identifying dictionary storage unit 141 in a manner correlated with a specific face identifying dictionary. For example, "001", "002", and "003" are appended as dictionary numbers and stored. Here, in a case where the specific face identifying processing is performed by the specific face identifying unit 140, of the multiple specific face identifying dictionaries stored in the specific face identifying dictionary storage unit 141, the specific face identifying processing is performed by employing the specific face identifying dictionary relating to at least one specific face specified by the user. Specifically, in a case where a specification operation for specifying the specific face identifying dictionary relating to at least one specific face from the multiple specific face identifying dictionaries stored in the specific face identifying dictionary storage unit 141 is accepted by the operation accepting unit 190, the dictionary number corresponding to the specified specific face identifying dictionary is recorded in the dictionary number 171 of the assistant image display information holding unit 170 (shown in Fig. 5). Subsequently, in a case where the specific face identifying processing is performed by the specific face identifying unit 140, the specific face identifying processing is performed by employing the specific face identifying dictionary corresponding to the dictionary number recorded in the dictionary number 171 of the assistant image display information holding unit 170. Description will be made here regarding a case where "001" is recorded in the dictionary number 171 of the assistant image display information holding unit 170 as an example.

The imaged image 400 shown in Fig. 2B includes three persons 411 through 413. Accordingly, the faces of the persons 411 through 413 are detected by the face detecting unit 130, and face images 401 through 403, and the positions and size thereof are output to the specific face identifying unit 140. Subsequently, the specific face identifying unit 140 employs the specific face identifying dictionary corresponding to the dictionary number "001" of the specific face specified by the user to perform the specific face identifying processing regarding the face images 301 through 303, and the specific face specified by the user is identified by this specific face identifying processing. For example, as shown in Fig. 2B, the face image 401 which is generally the same as the specific face representing the specific face identifying dictionary corresponding to the dictionary number "001" is identified as the specific face. Note that an arrangement may be made wherein multiple specific faces are specified beforehand, and at least one of these multiple specific faces is identified.

Fig. 3 is a diagram schematically illustrating the content stored in the assistant image management table storage unit 200 according to the embodiment of the present invention. The assistant image management table storage unit 200 stores a management number 210, layout assistant image information 220, vertical movement instruction image display threshold 230, horizontal movement instruction image display threshold 240, zoom instruction image display threshold 250, and latency time counter threshold 260 for each layout assistant image. Note that, with the embodiment of the present invention, description will be made regarding an example employing three types of layout assistant images.

The management number 210 is an identifying number to be added to each of multiple types of layout assistant images, and for example, stores management numbers 1 through 3 which correspond to the three types of layout assistant images, respectively.

The layout assistant image information 220 is information for displaying a layout assistant image, and includes a template image, face position, and face size. The template image is the template image of the layout assistant image displayed on the display unit 300 in a manner overlaid on an imaged image, and for example, "template image A" through "template image C" are stored in a manner correlated with the "1" through "3" of the management number 210. Note that these template images will be described in detail with reference to Figs. 4A through 4C. Here, in a case where the imaged image is regarded as plane coordinates, the coordinates of the center position of a rectangle which is equivalent to the face region of a layout assistant image are stored in the face position. Further, the height and width of the rectangle which is equivalent to the face region thereof are stored in the face size. Specifically, the position and size of the face region determined by layout assistant image are stored in the face position and face size.

The vertical movement instruction image display threshold 230 is a threshold employed in a case where determination is made whether to display an upwards movement instruction image or downwards movement instruction image which serves as an indicator for moving the person having a specific face in the vertical direction within an imaged image.

The horizontal movement instruction image display threshold 240 is a threshold employed in a case where determination is made whether to display a leftwards movement instruction image or rightwards movement instruction image which serves as an indicator for moving the person having a specific face in the horizontal direction within an imaged image.

The zoom instruction image display threshold 250 is a threshold employed in a case where determination is made whether to display a zoom instruction image which serves as an indicator for performing a zoom operation for enlarging or reducing the person having a specific face within an imaged image. Note that with regard to each threshold of the vertical movement instruction image display threshold 230, horizontal movement instruction image display threshold 240, and zoom instruction image display threshold 250, the value thereof may be changed according to the "1" through "3" of the management number 210, or the same value may be employed regarding each of the "1" through "3" of the management number 210.

The latency time counter threshold 260 is a threshold employed at the time of changing to the next layout assistant image following the specific face fitting into the layout assistant image displayed on the display unit 300. That is to say, this threshold is a value indicting latency time since the specific face fits the layout assistant image until the displayed layout assistant image is switched to the next layout assistant image.

Figs. 4A through 4C are diagrams illustrating examples of template images including a layout assistant image stored in the assistant image management table storage unit 200 according to the embodiment of the present invention. The embodiment of the present invention illustrates a case where layout assistant images for gradually displaying the specific face of a person included in an imaged image in order at the center portion of an imaging range, as an example. Fig. 4A illustrates a template image A 221 corresponding to the "1" of the management number 210, Fig. 4B illustrates a template image B 224 corresponding to the "2" of the management number 210, and Fig. 4C illustrates a template image C 227 corresponding to the "3" of the management number 210.

The template image A 221 includes a layout assistant image 222, and this layout assistant image 222 is displayed on the display unit 300 in a manner overlaid on an imaged image. Also, a rectangle 223 shown in the template image A 221 is a region equivalent to the face portion of the layout assistant image 222, and the position and size determined by this region are stored in the face position and face size of the layout assistant image information 220. Specifically, a face position (X1, Y1) of the layout assistant image information 220 stores a face position O1 which is the center position of the rectangle 223, and a face size (H1, W1) of the layout assistant image information 220 stores the length (width) W1 in the horizontal direction and the length (height) H1 in the vertical direction of the rectangle 223. Also, the relation between a layout assistant image 225 and a rectangle 226 within the template image B 224, and the relation between a layout assistant image 228 and a rectangle 229 within the template image C 227 are the same as the relation between the layout assistant image 222 and rectangle 223 within the template image A 221, and accordingly, description thereof will be omitted here. Here, for example, the layout assistant image 222 is an image to be displayed in a case where recording is performed so as to take the whole body of a specific person, the layout assistant image 225 is an image to be displayed in a case where recording is performed so as to take a specific person in bust close-up, and the layout assistant image 228 is an image to be displayed in a case where recording is performed so as to take the face of a specific person in close-up.

Fig. 5 is a diagram schematically illustrating the content held at the assistant image display information holding unit 170 according to the embodiment of the present invention. The assistant image display information holding unit 170 holds a dictionary number 171, management number 172, matching flag 173, and latency time counter 174.

The dictionary number 171 is a dictionary number corresponding to the specific face identifying dictionary specified by the user, of the multiple specific face identifying dictionaries stored in the specific face identifying dictionary storage unit 141, and Fig. 5 illustrates a case where the specific face identifying dictionary corresponding to the dictionary number "001" stored in the specific face identifying dictionary storage unit 141 is specified. The content of the dictionary number 171 is rewritten by the display control unit 180 according to the specification operation from the operation accepting unit 190.

The management number 172 is a management number currently selected of the multiple management numbers stored in the assistant image management table storage unit 200, and Fig. 5 illustrates a case where the management number "1" stored in the assistant image management table storage unit 200 is currently selected.

The matching flag 173 is a flag indicating whether or not the specific face fits into the layout assistant image (the layout assistant image displayed on the display unit 300) corresponding to the management number stored in the management number 172. Here, the case where the specific face fits into a layout assistant image means a case where the respective difference values calculated by the difference value calculating unit 150 are at or below the thresholds each corresponding to the vertical movement instruction image display threshold 230, horizontal movement instruction image display threshold 240, and zoom instruction image display threshold 250 stored in the assistant image management table storage unit 200 which correspond to the management number stored in the management number 172. For example, in a case where the specific face fits into the layout assistant image corresponding to the management number stored in the management number 172, "1" is stored by the display control unit 180, and in a case where the specific face does not fit the layout assistant image thereof, "0" is stored by the display control unit 180. Note that Fig. 5 illustrates a state wherein specific face does not fit the layout assistant image.

The latency time counter 174 is a counter indicating elapsed time since the specific face fitted into the layout assistant image corresponding to the management number stored in the management number 172. Specifically, elapsed time since "1" has been stored in the matching flag 173 is stored in the latency time counter 174 by the display control unit 180, and in a case where this elapsed time reaches the value of a latency time counter threshold 260 corresponding to the management number stored in the management number 172, the management number stored in the management number 172 is rewritten with the next number by the display control unit 180, and "0" is stored in the matching flag 173.

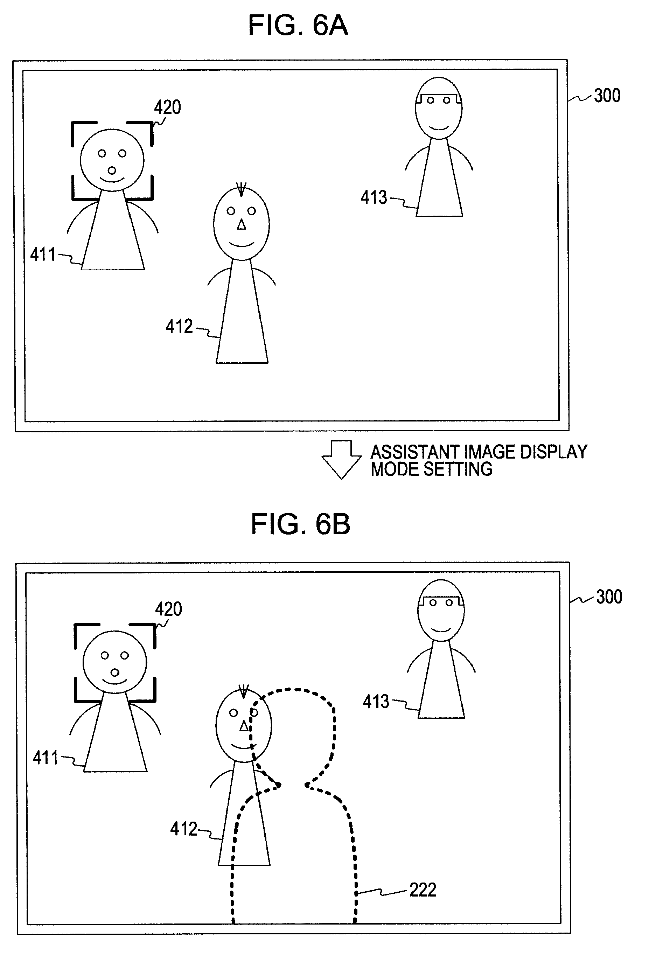

Figs. 6A and 6B, and Figs. 7B through 14B, are diagrams illustrating a display example of the display unit 300 according to the embodiment of the present invention. Also, Fig. 7A is a diagram schematically illustrating a calculating method for calculating a difference value for displaying an operation assistant image. Note that these display examples are display examples in a monitoring state or during recording a moving image in a case where the moving image recording mode is set.

Fig. 6A illustrates a state in which the imaged image 400 shown in Fig. 2B is displayed on the display unit 300 in a case where the assistant image display mode is set. This example illustrates a case where the face of the person 411 is identified as the specific face, and a specific face marker 420 is added to this face, in a case where the specific face identifying dictionary of the dictionary number "001" is specified by the user. Here, in a case where operation input for setting the assistant image display mode has been accepted by the operation accepting unit 190, as shown in Fig. 6B, a layout assistant image included in the template image corresponding to the management number stored in the management number 172 of the assistant image display information holding unit 170 is displayed in a manner overlaid on an imaged image. For example, as shown in Fig. 5, in a case where "1" is stored in the management number 172, the layout assistant image 222 included in the template image A 221 shown in Figs. 4A through 4C is displayed on the display unit 300 by the display control unit 180.

Fig. 7A schematically illustrates a calculating method for calculating the difference value between the layout assistant image 222 in the case of the display example shown in Fig. 6B and the face image 401 of the specific face. Also, Fig. 7A illustrates only the person 411 and position assistant image 222 of the display example shown in Fig. 6B, and illustrates the range having the same size as the imaged image shown in Fig. 6B as an imaging range 430. With an embodiment of the present invention, description will be made, as an example, regarding a case employing the face position of the layout assistant image information 220 on the imaged image, the difference values in the horizontal direction and vertical direction as to the center position of the face image of the specific face, and the difference value between the area determined with the face size of the layout assistant image information 220 on the imaged image, and the area of the face image of the specific face, as the difference values between the layout assistant image and the face image of the specific face. Specifically, let us say that the upper left corner of the imaging range 430 is taken as the origin (0, 0), on a x-y plane coordinates with the horizontal direction as the x axis, and the vertical direction as the y axis, the center position of the face image 401 of the specific face is coordinates (X11, Y11), the length in the vertical direction of the face image 401 of the specific face is height H11, and the length in the horizontal direction thereof is width W11. These values are detected by the face detecting unit 130. In this case, the difference value in the vertical direction between the face position 01 (X1, Y1) of the layout assistant image 222, and the center position coordinates (X11, Y11) of the face image 401 of the specific face is J11, and the difference value in the horizontal direction is S11. Also, the difference value between the area determined with the face size of the layout assistant image 222, and the area of the face image 401 of the specific face is obtained by (W1 x H1) - (W11 x H11). Thus, the difference value calculating unit 150 calculates the respective difference values based on the position and size of the face image of the specific face, and the position and size of the face region determined with the layout assistant image. Subsequently, the operation assistant image generating unit 160 generates an operation assistant image based on these difference values, and the display control unit 180 controls the display unit 300 to display the generated operation assistant image in a manner overlaid on the imaged image.

Specifically, in a case where the absolute value of the difference value J11 in the vertical direction is greater than the value of "J1" stored in the vertical movement instruction image display threshold 230 corresponding to the "1" of the management number 210, an operation assistant image indicating the direction to move is generated. Here, in a case where the face position O1 (X1, Y1) of the layout assistant image 222 is regarded as a standard, in a case where the absolute value of the difference value J11 in the vertical direction is greater than the value of "J1", if the difference value J11 in the vertical direction is a positive value, an upwards movement instruction image indicating that the imaging apparatus 100 is subjected to tilting to the upper side is generated, and if the difference value J11 in the vertical direction is a negative value, an downwards movement instruction image indicating that the imaging apparatus 100 is subjected to tilting to the lower side is generated. For example, with the example shown in Fig. 7A, the difference value J11 in the vertical direction is a positive value, an upwards movement instruction image 442 (shown in Fig. 7B) indicating that the imaging apparatus 100 is subjected to tilting to the upper side is generated. Here, a length AJ11 in the vertical direction of the upwards movement instruction image 442 is determined according to the difference value J11 in the vertical direction. As the difference value J11 becomes greater, the length AJ11 in the vertical direction of the upwards movement instruction image 442 becomes longer. Subsequently, as shown in Fig. 7B, the upwards movement instruction image 442 is displayed on the display unit 300 in a manner overlaid on the imaged image. Here, tilting means that the imaging apparatus 100 is swung in the vertical direction in a state in which the shooting position of the photographer is not changed.

Similarly, in a case where the absolute value of the difference value S11 in the horizontal direction is greater than the value of "S1" stored in the horizontal movement instruction image display threshold 240 corresponding to the "1" of the management number 210, an operation assistant image indicating the direction to move is generated. Here, in a case where the face position O1 (X1, Y1) of the layout assistant image 222 is regarded as a standard, in a case where the absolute value of the difference value S11 in the horizontal direction is greater than the value of "S1", if the difference value S11 in the horizontal direction is a positive value, a leftwards movement instruction image indicating that the imaging apparatus 100 is subjected to panning to the left side is generated, and if the difference value S11 in the horizontal direction is a negative value, a rightwards movement instruction image indicating that the imaging apparatus 100 is subjected to panning to the right side is generated. For example, with the example shown in Fig. 7A, the difference value S11 in the horizontal direction is a positive value, a leftwards movement instruction image 442 (shown in Fig. 7B) indicating that the imaging apparatus 100 is subjected to panning to the left side is generated. Here, a length AS11 in the horizontal direction of the leftwards movement instruction image 441 is determined according to the difference value S11 in the horizontal direction. Subsequently, as shown in Fig. 7B, the leftwards movement instruction image 441 is displayed on the display unit 300 in a manner overlaid on the imaged image. Here, panning means that the imaging apparatus 100 is swung in the horizontal direction in a state in which the shooting position of the photographer is not changed.

Similarly, in a case where the absolute value of the difference value between the area determined with the face size of the layout assistance image 222, and the area of the face 401 of the specific face is greater than the value of "Z1" stored in the zoom instruction image display threshold 250 corresponding to the "1" of the management number 210, an operation assistant image indicating the operation amount to perform a zoom operation is generated. Here, in a case where the area determined by the face size (H1, W1) of the layout assistant image 222 is regarded as a standard, in a case where the absolute value of the difference value of the areas is greater than the value of "Z1", if the difference value of the areas thereof is a positive value, a zoom instruction image indicating that a zoom up operation (enlarging operation) is performed is generated, and if the difference value of the areas thereof is a negative value, a zoom instruction image indicating that a zoom down operation (reducing operation) is performed is generated. For example, with the example shown in Fig. 7A, the difference value of the areas thereof is a positive value, a zoom instruction image 443 (shown in Fig. 7B) indicating that a zoom up operation (enlarging operation) is performed is generated. Here, a length HW11 in the vertical direction of the zoom instruction image 443 is determined according to the difference value of the areas thereof. Specifically, as the difference value of the areas thereof becomes greater, the length HW 11 in the vertical direction of the zoom instruction image 443 becomes longer. Subsequently, as shown in Fig. 7B, the zoom instruction image 443 is displayed on the display unit 300 in a manner overlaid on the imaged image. Note that, Fig. 7B illustrates an example wherein the leftwards movement instruction image 441 is disposed on the upper side of the layout assistant image 222, the upwards movement instruction image 442 is disposed on the upper side of the layout assistant image 222, and the zoom instruction image 443 is disposed on the right side of the layout assistant image 222, but another layout may be employed. For example, an operation assistant image may be disposed in a region where a face has not been detected. Also, this example illustrates a case where the length of the operation assistant image is changed according to the difference value, but for example, the operation amount may be informed to the user by changing the heaviness or transmittance or the like of the operation assistant image according to the difference value.

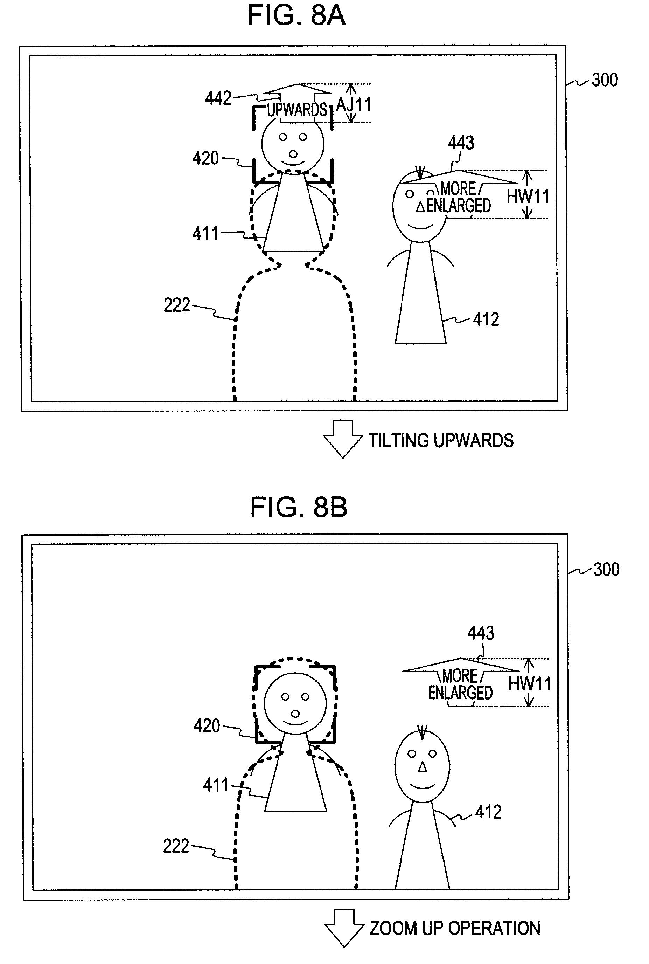

Fig. 8A illustrates a display example after the imaging apparatus 100 is subjected to panning to the left side by the user in accordance with the leftwards movement instruction image 441 shown in Fig. 7B. As shown in Fig. 8A, in a case where the absolute value of the difference value S11 in the horizontal direction reaches within the range of the value of "S1" stored in the horizontal movement instruction image display threshold 240 corresponding to the "1" of the management number 210, the leftwards movement instruction image 441 is eliminated. Here, for example, in a case where a panning operation is discontinued while the imaging apparatus 100 is subjected to panning to the left side by the user, and in a case where the absolute value of the difference value S11 in the horizontal direction is greater than the value of "S1", the length of the leftwards movement instruction image 441 is reduced and displayed according to the difference value S11 in the horizontal direction. Note that, with the example shown in Fig. 8A, there is no change regarding the difference value in the vertical direction and the difference value of the areas (sizes), so similar to Fig. 7B, the upwards movement instruction image 442 and zoom instruction image 443 are displayed continuously.

Fig. 8B illustrates a display example after the imaging apparatus 100 is subjected to tilting to the upper side by the user in accordance with the upwards movement instruction image 442 shown in Fig. 8A. As shown in Fig. 8B, in a case where the absolute value of the difference value J11 in the vertical direction reaches within the range of the value of "J1" stored in the vertical movement instruction image display threshold 230 corresponding to the "1" of the management number 210, the upwards movement instruction image 442 is eliminated. Here, for example, in a case where a tilting operation is discontinued while the imaging apparatus 100 is subjected to tilting to the upper side by the user, and in a case where the absolute value of the difference value J11 in the vertical direction is greater than the value of "J1", the length of the upwards movement instruction image 442 is reduced and displayed according to the difference value J11 in the vertical direction. Note that, with the example shown in Fig. 8B, there is no change regarding the difference value of the areas, so similar to Fig. 8A, the zoom instruction image 443 is displayed continuously.

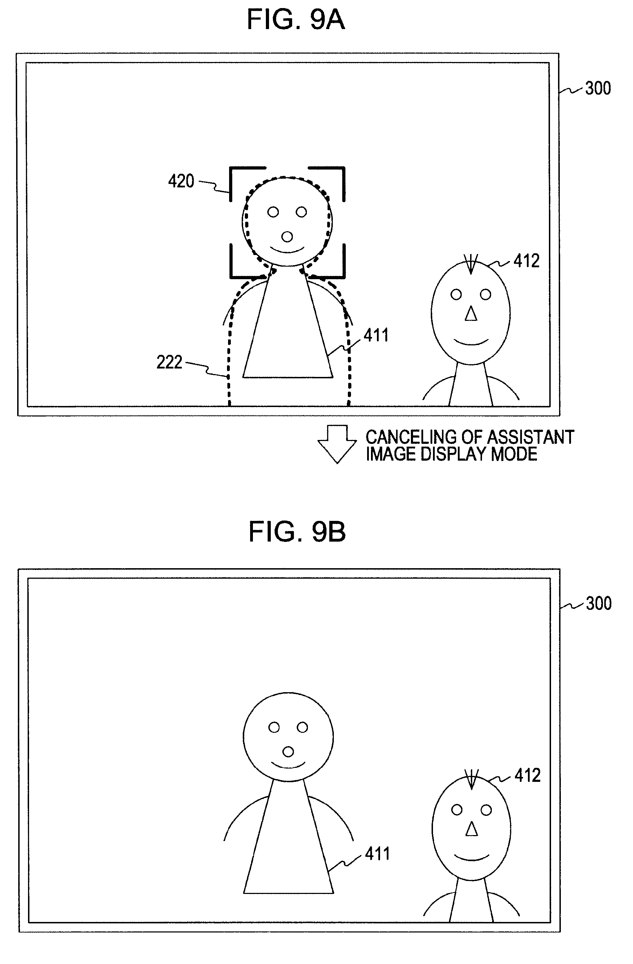

Fig. 9A illustrates a display example after a zoom up operation is performed from the operation accepting unit 190 by the user in accordance with the zoom instruction image 443 shown in Fig. 8B. As shown in Fig. 9A, in a case where the absolute value of the difference value of the areas reaches within the range of the value of "Z1" stored in the zoom instruction image display threshold 250 corresponding to the "1" of the management number 210, the zoom instruction image 443 is eliminated. Here, for example, in a case where a zoom up operation is discontinued while the zoom up operation is performed from the operation accepting unit 190 by the user, and in a case where the absolute value of the area is greater than the value of "Z1", the length of the zoom instruction image 443 is reduced and displayed according to the difference value of the areas. Thus, with the example shown in Fig. 9A, the respective difference values in the vertical and horizontal direction and sizes reach within the ranges of the respective thresholds corresponding to the "1" of the management number 210, so all of the leftwards movement instruction image 441, upwards movement instruction image 442, and zoom instruction image 443 are eliminated.

Fig. 9B illustrates a display example after operation input for canceling the assistant image display mode is accepted by the operation accepting unit 190 in a display state shown in Fig. 9A. Thus, in the case where operation input for canceling the assistant image display mode has been accepted, the layout assistant image 222 is eliminated. Note that in a case where operation assistant images such as the leftwards movement instruction image 441, upwards movement instruction image 442, zoom instruction image 443, and so forth are displayed, these operation assistant images are also eliminated. Thus, in a case where the specific face is disposed in a user's favorite manner, just the imaged image can be displayed by performing operation input for canceling the assistant image display mode.

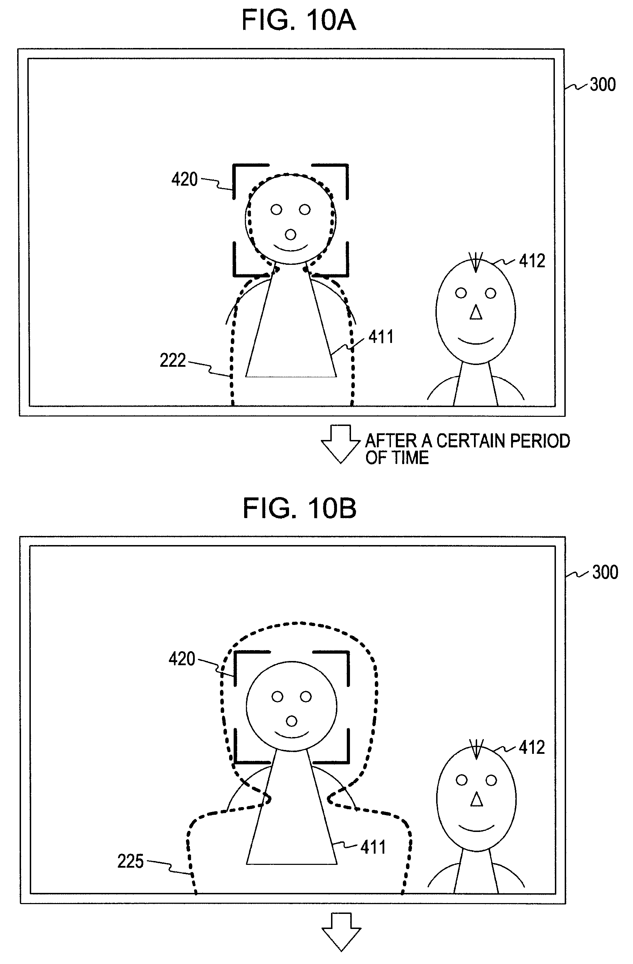

Fig. 10B illustrates a display example after a certain period of time elapses ("T1" of the latency time counter threshold 260 shown in Fig. 3) without operation input for canceling the assistant image display mode in a display state shown in Fig. 10A. Note that the display example shown in Fig. 10A is the same as the display example shown in Fig. 9A. As shown in Fig. 10A, in a case where since the specific face fitted into the face region of the layout assistant image 222, the time of "T1" stored in the latency time counter threshold 260 corresponding to the "1" of the management number 210 has elapsed, the layout assistant image 222 is eliminated, and the layout assistant image 225 included in the template image B 224 stored in the template image of the layout assistant image information 220 corresponding to the "2" of the management number 210 is displayed on the display unit 300 in a manner overlaid on an imaged image. Specifically, in a case where a certain period of time has elapsed since the specific face fitted to the face region of the layout assistant image, the layout assistant image is switched and displayed in accordance with the order of the management number 210. Subsequently, the respective difference values between the layout assistant image after switching and the specific face are calculated, and an operation assistant image is displayed based on the respective difference values. Note that in a case where a certain period of time has elapsed since the specific face fitted to the face region of the layout assistant image, the layout assistant image may be switched on condition that a moving image is being recorded.

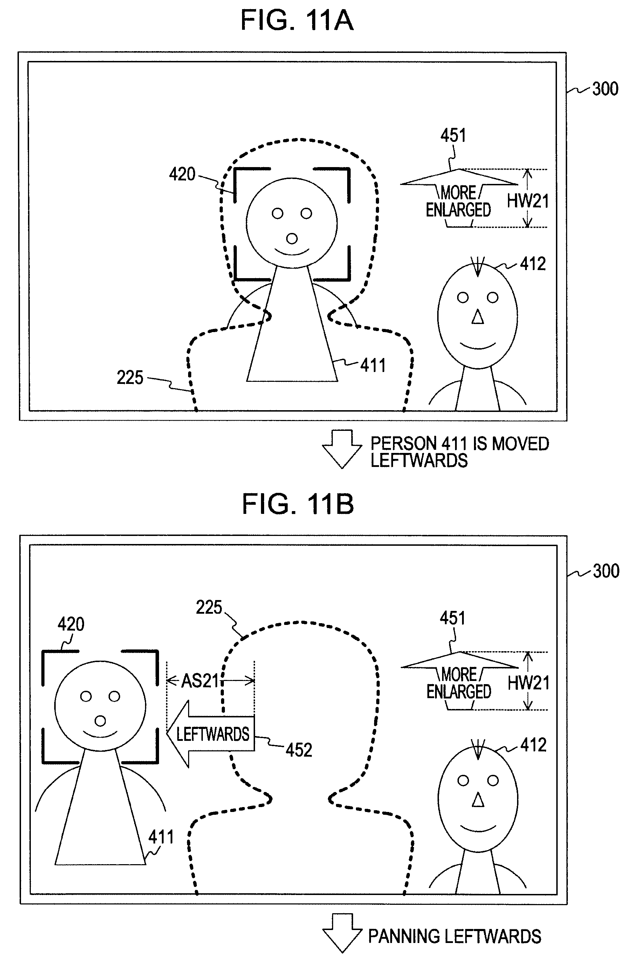

Fig. 11A illustrates a display example of an operation assistant image generated based on the respective difference values between the layout assistant image after switching and the specific face. The display example shown in Fig. 11A illustrates a case where a zoom instruction image 451 is displayed as an operation assistant image. Here, the length HW21 of the zoom instruction image 451 is determined with the difference value calculated in the same way as the calculating method shown in Fig. 7A. Also, with the display example shown in Fig. 11A, none of the difference values in the vertical direction and horizontal direction exceeds the thresholds, so an operation assistant image for moving in the vertical direction and horizontal direction is not displayed. Here, for example, in a case where a person 411 having the specific face moves to the left on the imaged image, and in a case where the absolute value of the difference value in the horizontal direction becomes greater than the value of "S2" stored in the horizontal movement instruction image display threshold 240 corresponding to the "2" of the management number 210, as shown in Fig. 11B, a leftwards movement instruction image 452 is displayed. Note that the length AS21 of the leftwards movement instruction image 452 is determined according to the difference value in the horizontal direction. Also, with regard to a case where the imaging apparatus 100 is moved in the vertical/horizontal direction by the user, or the like, the respective difference values are calculated, and an operation assistant image is displayed based on these respective difference values.

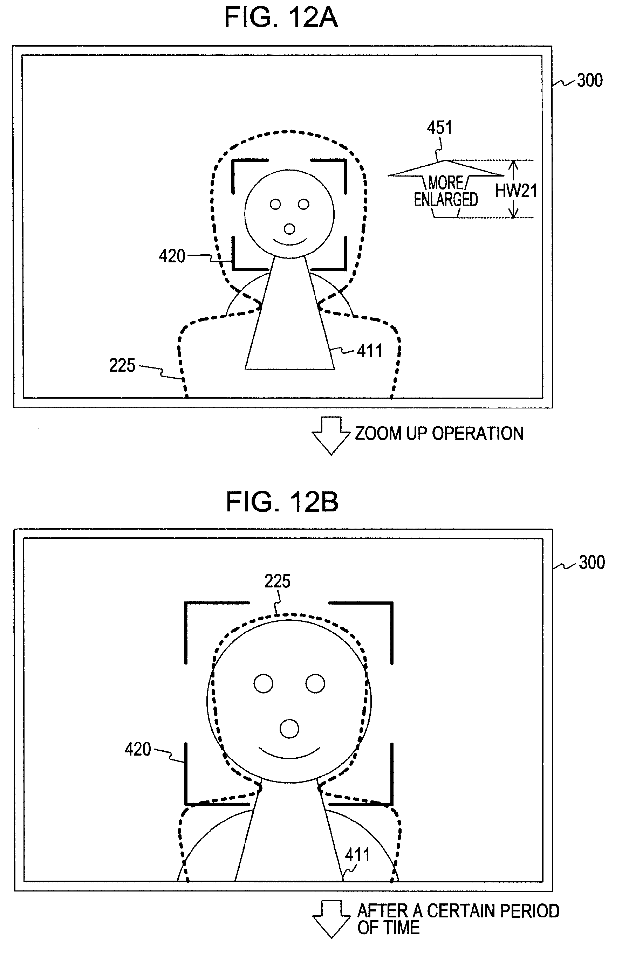

Fig. 12A illustrates a display example after the imaging apparatus 100 is subjected to panning to the left side in accordance with the leftwards movement instruction image 452 shown in Fig. 11B. As shown in Fig. 12A, in a case where the absolute value of the difference value in the horizontal direction reaches within the range of the value of "S2" stored in the horizontal movement instruction image display threshold 240 corresponding to the "2" of the management number 210, the leftwards movement instruction image 452 is eliminated. Note that, with the example shown in Fig. 12A, there is no change regarding the difference value of the areas, so similar to Fig. 11B, the zoom instruction image 451 is displayed continuously.

Fig. 12B illustrates a display example after a zoom up operation is performed from the operation accepting unit 190 by the user in accordance with the zoom instruction image 451 shown in Fig. 12A. As shown in Fig. 12B, in a case where the absolute value of the difference value of the areas reaches within the range of the value of "Z2" stored in the zoom instruction image display threshold 250 corresponding to the "2" of the management number 210, the zoom instruction image 451 is eliminated. Thus, with the example shown in Fig. 12B, the respective difference values in the vertical and horizontal direction and size reach within the ranges of the respective thresholds corresponding to the "2" of the management number 210, so all of the leftwards movement instruction image, upwards movement instruction image, and zoom instruction image are eliminated.

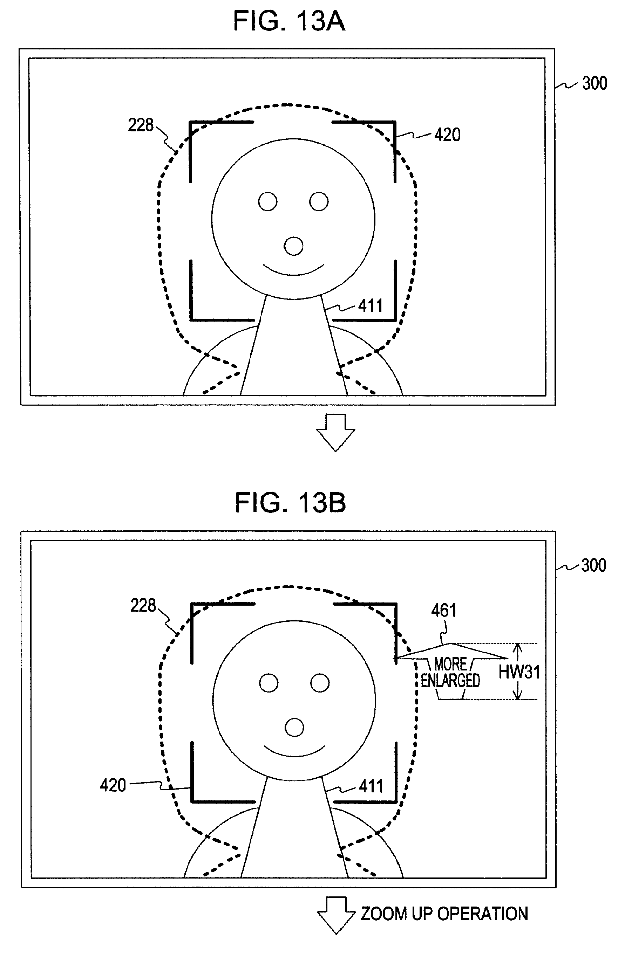

Fig. 13A illustrates a display example after a certain period of time elapses ("T2" of the latency time counter threshold 260 shown in Fig. 3) without operation input for canceling the assistant image display mode in a display state shown in Fig. 12B. As shown in Fig. 13A, in a case where since the specific face fitted into the face region of the layout assistant image 222, the time of "T2" stored in the latency time counter threshold 260 corresponding to the "2" of the management number 210 has elapsed, the layout assistant image 225 is eliminated, and the layout assistant image 228 included in the template image C 227 stored in the template image of the layout assistant image information 220 corresponding to the "3" of the management number 210 is displayed on the display unit 300 in a manner overlaid on an imaged image. Subsequently, the respective difference values between the layout assistant image after switching and the specific face are calculated, and an operation assistant image is displayed based on the respective difference values.

Fig. 13B illustrates a display example of an operation assistant image generated based on the respective difference values between the layout assistant image after switching and the specific face. The display example shown in Fig. 13B illustrates a case where a zoom instruction image 461 is displayed as an operation assistant image. Here, the length HW31 of the zoom instruction image 461 is determined with the difference value calculated in the same way as the calculating method shown in Fig. 7A. Also, with the display example shown in Fig. 13B, none of the difference values in the vertical direction and horizontal direction exceeds the thresholds, so an operation assistant image for moving in the vertical direction and horizontal direction is not displayed.

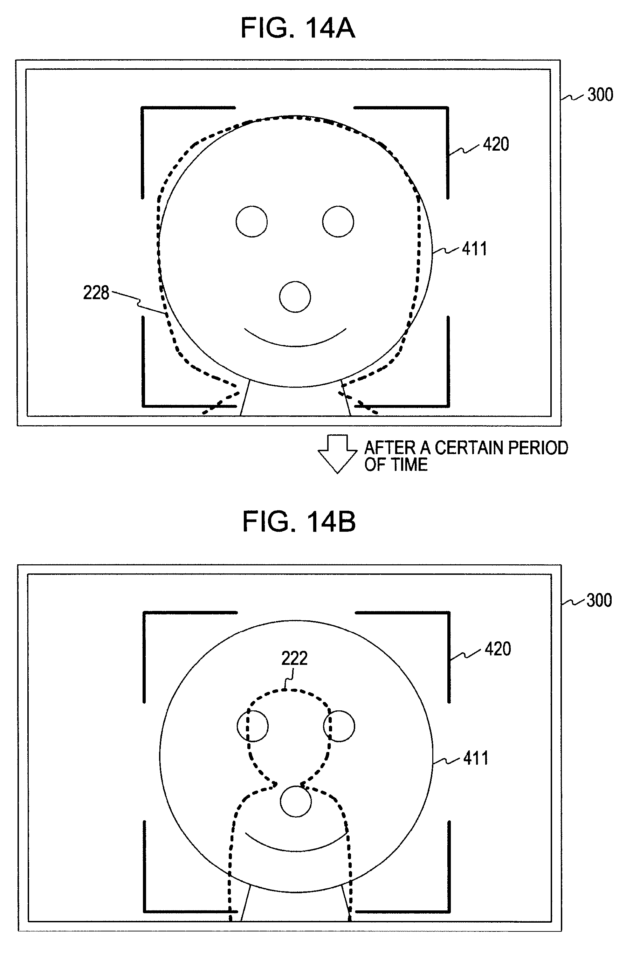

Fig. 14A illustrates a display example after a zoom up operation is performed from the operation accepting unit 190 by the user in accordance with the zoom instruction image 461 shown in Fig. 13B. As shown in Fig. 14A, in a case where the absolute value of the difference value of the areas reaches within the range of the value of "Z3" stored in the zoom instruction image display threshold 250 corresponding to the "3" of the management number 210, the zoom instruction image 461 is eliminated. Thus, with the example shown in Fig. 14A, the respective difference values in the vertical and horizontal direction and sizes reach within the ranges of the respective thresholds corresponding to the "1" of the management number 210, so all of the leftwards movement instruction image, upwards movement instruction image, and zoom instruction image are eliminated.

Fig. 14B illustrates a display example after a certain period of time elapses ("T3" of the latency time counter threshold 260 shown in Fig. 3) without operation input for canceling the assistant image display mode in a display state shown in Fig. 14B. As shown in Fig. 14B, in a case where since the specific face fitted into the face region of the layout assistant image 228, the time of "T3" stored in the latency time counter threshold 260 corresponding to the "3" of the management number 210 has elapsed, the layout assistant image 228 is eliminated, and the layout assistant image 222 included in the template image A 221 stored in the template image of the layout assistant image information 220 corresponding to the "1" of the management number 210 is displayed on the display unit 300 in a manner overlaid on an imaged image. Thus, in a case where the management number 210 corresponding to the currently displayed layout assistant image is the lowermost end number "3", switching is performed so as to return to the uppermost end number "1" of the management number 210. Here, in a case where the management number 210 corresponding to the currently displayed layout assistant image is the lowermost end number "3", the assistant image display mode may be canceled automatically without switching to the uppermost end number "1" of the management number 210.

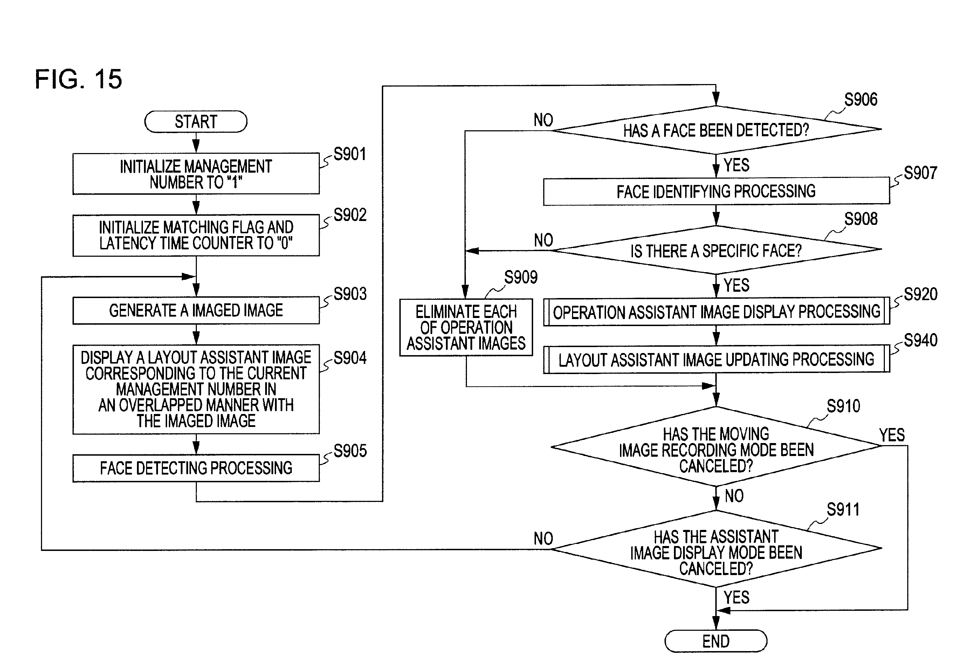

Next, description will be made regarding the operation of the imaging apparatus 100 according to the embodiment of the present invention, with reference to the drawings. Fig. 15 is a flowchart illustrating the processing procedure of assistant image display processing by the imaging apparatus 100 according to the embodiment of the present invention. With this example, description will be made regarding a case where the dictionary number of the specific face identifying dictionary relating to the specific face specified by the user is stored in the dictionary number 171 of the assistant image display information holding unit 170. Also, in this example, description will be made regarding a case where the moving image recording mode and assistant image display mode are set by the user.

First, the display control unit 180 initializes the management number 172 of the assistant image display information holding unit 170 to "1" (step S901), and initializes the matching flag 173 and latency time counter 174 of the assistant image display information holding unit 170 to "0" (step S902). Subsequently, the imaging unit 120 generates an imaged image (step S903), and the display control unit 180 displays the layout assistant image of the template image stored in the assistant image management table storage unit 200 corresponding to the management number stored in the management number 172 of the assistant image display information holding unit 170 in a manner overlaid on the imaged image on the display unit 300 (step S904).

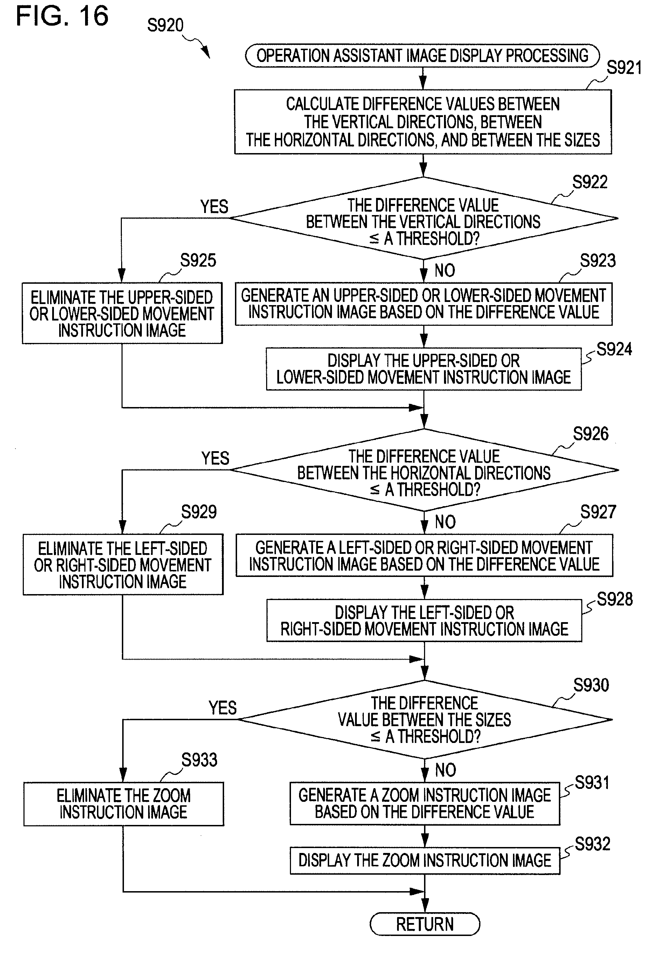

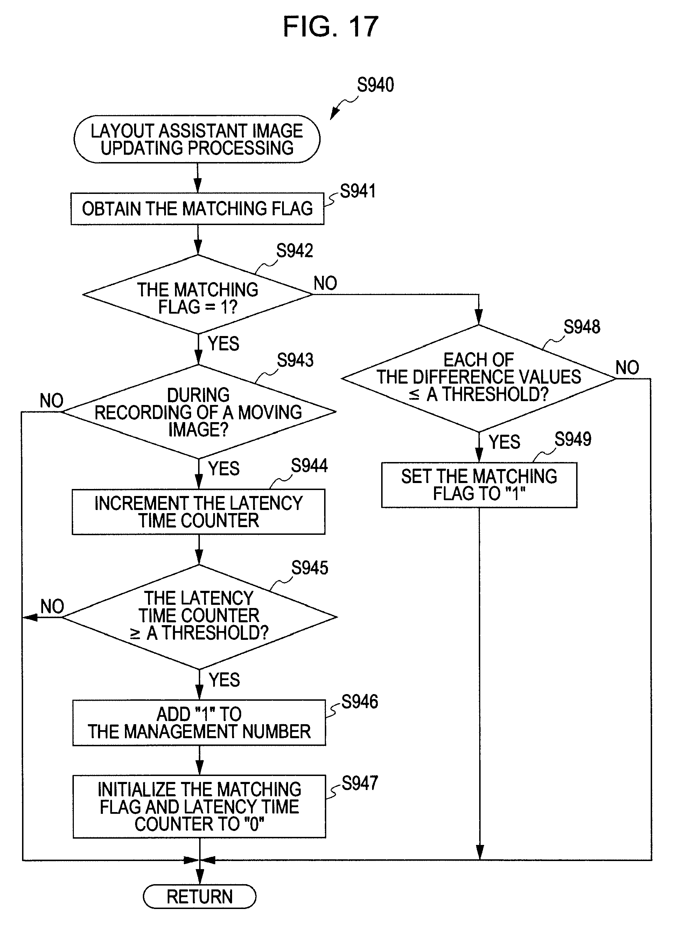

Also, the face detecting unit 130 performs face detecting processing for detecting a face from the imaged image generated by the imaging unit 120 (step S905). Subsequently, in a case where a face has been detected from the imaged image (step S906), the specific face identifying unit 140 employs the specific face identifying dictionary relating to the specified specific face to perform face identifying processing regarding the detected face (step S907). Subsequently, in a case where the detected face has been identified as the specific face (step S908), operation assistant image display processing is performed (step S920). This operation assistant image display processing will be described in detail with reference to Fig. 16. Subsequently, layout assistant image updating processing is performed (step S940). This layout assistant image updating processing will be described in detail with reference to Fig. 17.

On the other hand, in a case where no face has been detected from the imaged image (step S906), or in a case where the detected face has not been detected as the specific face (step S908), the display control unit 180 eliminates the respective operation assistant images displayed in a manner overlaid on the imaged image (step S909) .

Subsequently, the display control unit 180 determines whether or not the moving image recording mode has been canceled (step S910), and in a case where the moving image recording mode has not been canceled, determines whether or not the assistant image display mode has been canceled (step S911). In a case where the moving image recording mode has been canceled (step S910), or in a case where the assistant image display mode has been canceled (step S911), the operation of the assistant image display processing is ended. On the other hand, in a case where the moving image recording mode has not been canceled (step S910), and also in a case where the assistant image display mode has not been canceled (step S911), the flow returns to step S903.

Fig. 16 is a flowchart illustrating an operation assistant image display processing procedure (the processing procedure in step S920 shown in Fig. 15) of the processing procedures of the assistant image display processing by the imaging apparatus 100 according to the embodiment of the present invention.

First, the difference value calculating unit 150 compares the face position and face size stored in the assistant image management table storage unit 200 corresponding to the management number stored in the management number 172 of the assistant image display information holding unit 170, and the position and size of the face image identified as the specific face, thereby calculating the difference values in the horizontal direction and vertical direction, and the difference value of the sizes (step S921) . Subsequently, the operation assistant image generating unit 160 determines whether or not the calculated difference value in the vertical direction is at or below the value of the vertical movement instruction image display threshold 230 stored in the assistant image management table storage unit 200 corresponding to the management number stored in the management number 172 of the assistant image display information holding unit 170 (step S922) . In a case where the calculated difference value in the vertical direction is not at or below the value of the vertical movement instruction image display threshold 230 (step S922), the operation assistant image generating unit 160 generates an upwards movement instruction image or downwards movement instruction image based on the calculated difference value in the vertical direction (step S923). Subsequently, the display control unit 180 displays the generated upwards movement instruction image or downwards movement instruction image on the display unit 300 in a manner overlaid on the imaged image (step S924). On the other hand, in a case where the calculated difference value in the vertical direction is at or below the value of the vertical movement instruction image display threshold 230 (step S922), the display control unit 180 eliminates the currently displayed upwards movement instruction image or downwards movement instruction image (step S925). Note that in a case where an upwards movement instruction image and downwards movement instruction image are not displayed, this eliminating processing is not performed.

Subsequently, the operation assistant image generating unit 160 determines whether or not the calculated difference value in the horizontal direction is at or below the value of the horizontal movement instruction image display threshold 240 stored in the assistant image management table storage unit 200 corresponding to the management number stored in the management number 172 of the assistant image display information holding unit 170 (step S926). In a case where the calculated difference value in the horizontal direction is not at or below the value of the horizontal movement instruction image display threshold 240 (step S926), the operation assistant image generating unit 160 generates a leftwards movement instruction image or rightwards movement instruction image based on the calculated difference value in the horizontal direction (step S927). Subsequently, the display control unit 180 displays the generated leftwards movement instruction image or rightwards movement instruction image on the display unit 300 in a manner overlaid on the imaged image (step S928). On the other hand, in a case where the calculated difference value in the horizontal direction is at or below the value of the horizontal movement instruction image display threshold 240 (step S926), the display control unit 180 eliminates the currently displayed leftwards movement instruction image or rightwards movement instruction image (step S929). Note that in a case where a leftwards movement instruction image and rightwards movement instruction image are not displayed, this eliminating processing is not performed.

Subsequently, the operation assistant image generating unit 160 determines whether or not the calculated difference value of the sizes is at or below the value of the zoom instruction image display threshold 250 stored in the assistant image management table storage unit 200 corresponding to the management number stored in the management number 172 of the assistant image display information holding unit 170 (step S930) . In a case where the calculated difference value of the sizes is not at or below the value of the zoom instruction image display threshold 250 (step S930), the operation assistant image generating unit 160 generates a zoom instruction image based on the calculated difference value of the sizes (step S931). Subsequently, the display control unit 180 displays the generated zoom instruction image on the display unit 300 in a manner overlaid on the imaged image (step S932) . On the other hand, in a case where the calculated difference value of the sizes is at or below the value of the zoom instruction image display threshold 250 (step S930), the display control unit 180 eliminates the currently displayed zoom instruction image (step S933). Note that in a case where a zoom instruction image is not displayed, this eliminating processing is not performed.

Fig. 17 is a flowchart illustrating a layout assistant image updating processing procedure (the processing procedure in step S940 shown in Fig. 15) of the processing procedures of the assistant image display processing by the imaging apparatus 100 according to the embodiment of the present invention.

First, the display control unit 180 obtains the value of the matching flag 173 of the assistant image display information holding unit 170 (step S941), and determines whether or not the value of the matching flag 173 is "1" (step S942) . In a case where the value of the matching flag 173 is "1" (step S942), the display control unit 180 determines whether or not recording of a moving image is under operation (step S943), and in a case where recording of a moving image is under operation, increments the value of the latency time counter 174 of the assistant image display information holding unit 170 (step S944), and determines whether or not the value of the latency time counter 174 after increment is at or above the value of the latency time counter threshold 260 stored in the assistant image management information holding unit 200 corresponding to the management number stored in the management number 172 of the assistant image display information holding unit 170 (step S945). In a case where the value of the latency time counter 174 is at or above the value of the latency time counter threshold 260 (step S945), the display control unit 180 adds "1" to the value of the management number 172 of the assistant image display information holding unit 170 (step S946), and initializes the matching flag 173 and latency time counter 174 of the assistant image display information holding unit 170 to "0" (step S947). Here, in a case where the value of the management number 172 of the assistant image display information holding unit 170 has reached the maximum value (e.g., "3" in the case shown in Fig. 3), the display control unit 180 stores "1" in the value of the management number 172 (step S946).

On the other hand, in a case where recording of a moving image is not under operation (step S943), or in a case where the value of the latency time counter 174 is not at or above the value of the latency time counter threshold 260 (step S945), the flow proceeds to step S910 shown in Fig. 15.

Also, in a case where the value of the matching flag 173 is "1" (step S942), the display control unit 180 determines, based on the output from the operation assistant image generating unit 160, whether or not each of the difference values calculated by the difference value calculating unit 150 is at or below the corresponding threshold of the vertical movement instruction image display threshold 230, horizontal movement instruction image display threshold 240, and zoom instruction image display threshold 250 stored in the assistant image management table storage unit 200 corresponding to the management number stored in the management number 172 of the assistant image display information holding unit 170 (step S948). In a case where each of the difference values calculated by the difference value calculating unit 150 is at or below the corresponding threshold (step S948), the display control unit 180 sets the value of the matching flag 173 of the assistant image display information holding unit 170 to "1" (step S949) . On the other hand, in a case where each of the difference values calculated by the difference value calculating unit 150 is not at or below the corresponding threshold (step S948), the flow proceeds to step S910 shown in Fig. 15.

With the above-mentioned description, the example has been shown wherein in a case where both of the difference values in the vertical and horizontal directions, and the difference value of the sizes exceed the corresponding thresholds, operation assistant images for moving in the vertical and horizontal directions, and an operation assistant image for allowing the user to perform a zoom operation are displayed simultaneously. The imaged image recorded by the imaging apparatus 100 can be viewed and listened to, for example, by a viewer such as a television set or the like. For example, in recent years, in the case of viewing and listening the imaged moving image recorded by the imaging apparatus 100 by employing a large-sized television set which has come into widespread use, an imaged image itself is displayed on a wide screen. Accordingly, an imaged image which the user was viewing at the display unit 300 of the imaging apparatus 100 during shooting, and the imaged image thereof displayed on a television set differ in the size of the imaged image itself. Accordingly, even in a case where the movement amount (including zoom amount) of an object is small on an imaged image which the user was viewing at the display unit 300 of the imaging apparatus 100 during shooting, there is a case where the movement amount of the object is great on the imaged image thereof displayed on a television set. Thus, in a case where the movement amount of an object is great, there is a possibility that tracking the moving object on a wide screen by the eyes prevents a viewer from viewing in a satisfactory manner. Therefore, in a case where an imaged moving image is recorded by the imaging apparatus 100 to facilitate a viewer viewing an imaged moving image in a satisfactory manner, it is important to perform panning in the horizontal direction, tilting in the vertical direction, a zoom operation, or the like in a relatively slow manner.

Therefore, description will be made below regarding an example wherein in a case where both of the difference values in the vertical and horizontal directions, and the difference value of the sizes exceed the corresponding thresholds, only an operation assistant image for moving in the vertical and horizontal directions is displayed, and only in a case where the difference values in the vertical and horizontal directions are at or below the corresponding thresholds, and also the difference value of the sizes exceeds the corresponding threshold, an operation assistant image for allowing the user to perform a zoom operation is displayed. Thus, the user is allowed to perform panning in the horizontal direction, tilting in the vertical direction, and a zoom operation separately, and accordingly, the user is allowed to perform operations in a relatively slow manner.

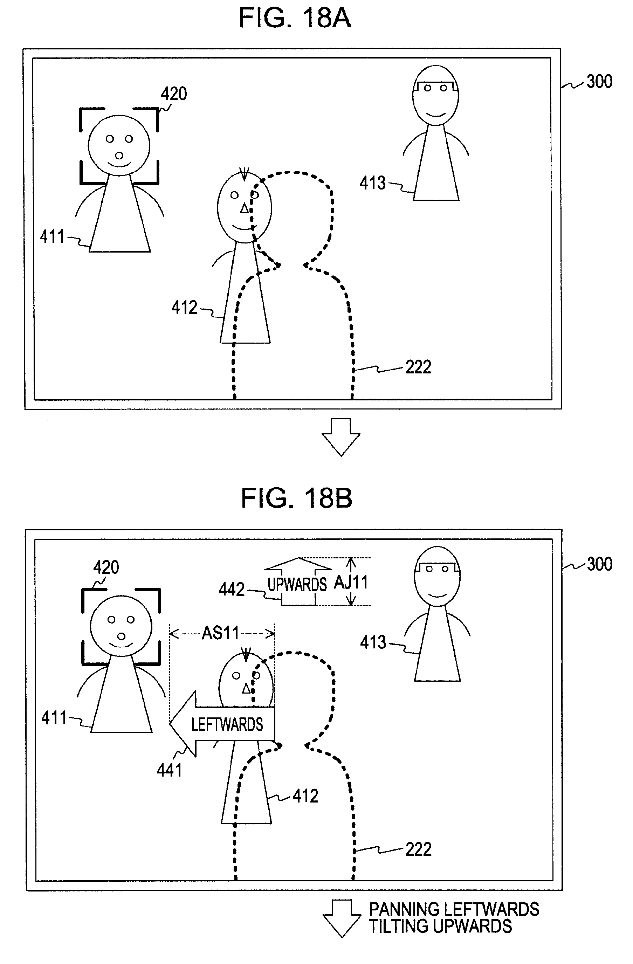

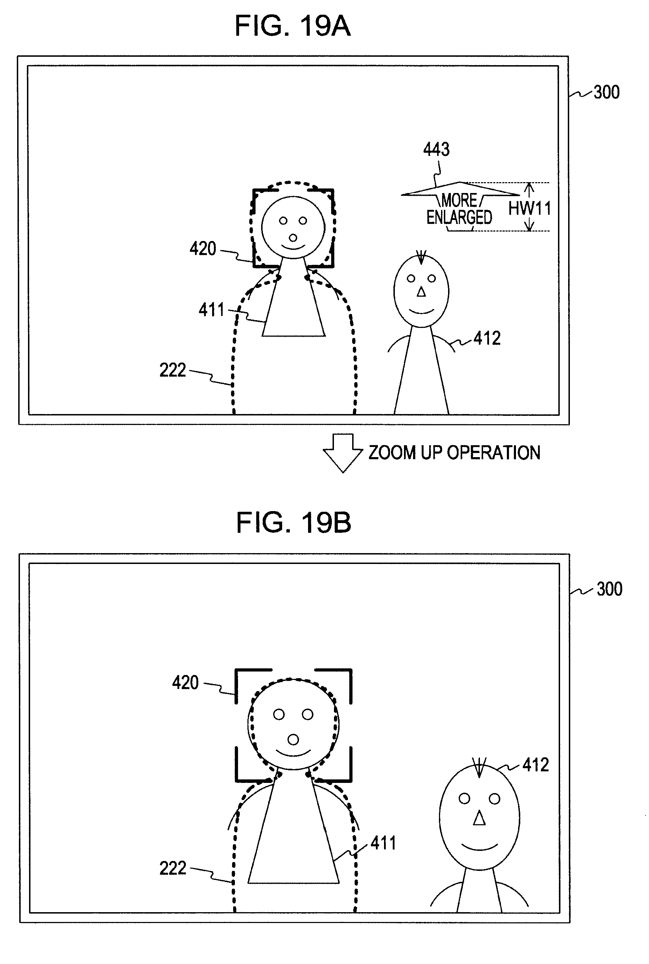

Figs. 18A through 19B are diagrams illustrating a display example of the display unit 300 according to the embodiment of the present invention. Note that the display example shown in Fig. 18A is the same as the display example shown in Fig. 6B, and the display example shown in Fig. 19B is the same as the display example shown in Fig. 9A.

As shown in Fig. 18A, for example, a layout assistant image 222 included in a template image A 221 corresponding to the management number "1" held at the management number 172 of the assistant image display information holding unit 170 is displayed in a manner overlaid on an imaged image. Subsequently, based on the difference values calculated in the same way as the calculating method shown in Fig. 7A, as shown in Fig. 18B, a leftwards movement instruction image 441 and upwards movement instruction image 442 are displayed on the display unit 300 in a manner overlaid on the imaged image. Here, even in a case where the absolute value of the difference value between the area determined with the face size of the layout assistant image 222, and the area of a face image 401 which is a specific face is greater than the value of "Z1" stored in the zoom instruction image display threshold 250 corresponding to the "1" of the management number 210, in a case where at least one of the leftwards movement instruction image 441 and upwards movement instruction image 442 is displayed on the display unit 300, no zoom instruction image is generated.

Fig. 19A illustrates a display example after panning to the left side and tilting to the upper side (including a movement operation of the imaging apparatus 100 in the upper left direction) of the imaging apparatus 100 is performed by the user in accordance with the leftwards movement instruction image 441 and upwards movement instruction image 442 shown in Fig. 18B. As shown in Fig. 19A, in a case where the absolute value of a difference value S11 in the horizontal direction reaches within the range of the value of "S1" corresponding to the "1" of the management number 210, and also the absolute value of a difference value J11 in the vertical direction reaches within the range of the value of "J1" corresponding to the "1" of the management number 210, the leftwards movement instruction image 441 and upwards movement instruction image 442 are eliminated. Subsequently, based on the difference values calculated in the same way as the calculating method shown in Fig. 7A, as shown in Fig. 19A, a zoom instruction image 443 is displayed on the display unit 300 in a manner overlaid on an imaged image. Note that in a case where either the absolute value S11 in the horizontal direction or the absolute value J11 in the vertical direction are out of the range of the threshold corresponding to the "1" of the management number 210, no zoom instruction image 443 is displayed.

Fig. 19B illustrates a display example after a zoom up operation is performed from the operation accepting unit 190 by the user in accordance with the zoom instruction image 443 shown in Fig. 19A. Thus, the operation assistant images for allowing the user to move the imaging apparatus 100 main unit (leftwards movement instruction image 441, upwards movement instruction image 442), and an operation assistant image for allowing the user to move the zoom lens within the imaging apparatus 100 (zoom instruction image 443) are displayed separately, whereby the user can be prevented from performing these operations simultaneously, and an imaged moving image which can be viewed easily at the time of viewing can be recorded.

Next, the operations shown in Figs. 18A through 19B of the imaging apparatus 100 according to the embodiment of the present invention will be described with reference to the drawings.

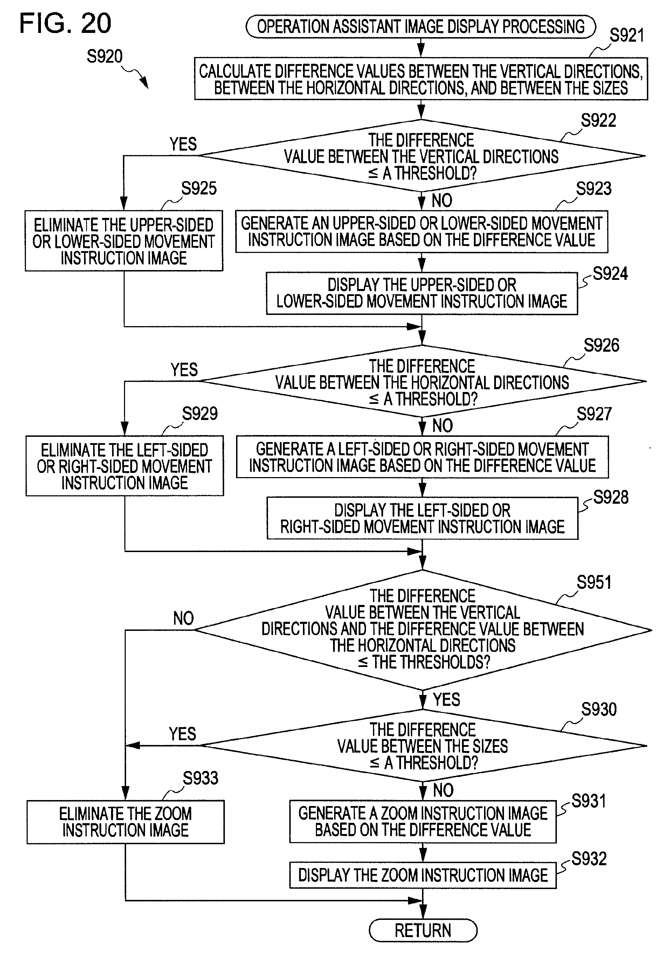

Fig. 20 is a flowchart illustrating an operation assistant image display processing procedure (the processing procedure in step S920 shown in Fig. 15) of the processing procedures of the assistant image display processing by the imaging apparatus 100 according to the embodiment of the present invention. This processing procedure is a modification of the processing procedure shown in Fig. 16, so steps S921 through S933 shown in Fig. 20 are the same processing procedure as steps S921 through S933 shown in Fig. 16, and accordingly, description thereof will be omitted here.

After the display or elimination processing is performed, which relates to an upwards movement instruction image, downwards movement instruction image, leftwards movement instruction image, or rightwards movement instruction image (steps S921 through S929), the operation assistant image generating unit 160 determines whether or not the calculated difference values in the vertical and horizontal directions are at or below the vertical movement instruction image display threshold 230 and horizontal movement instruction image display threshold 240 stored in the assistant image management table storage unit 200 corresponding to the management number stored in the management number 172 of the assistant image display information holding unit 170 (step S951) .

In a case where the calculated difference value in the vertical direction is at or below the vertical movement instruction image display threshold 230, and also the calculated difference value in the horizontal direction is at or below the horizontal movement instruction image display threshold 240 (step S951), the flow proceeds to step S930 . On the other hand, in a case where the calculated difference value in the vertical direction exceeds the vertical movement instruction image display threshold 230, or in a case where the calculated difference value in the horizontal direction exceeds the horizontal movement instruction image display threshold 240 (step S951), the display control unit 180 eliminates the currently displayed zoom instruction image (step S933). Note that in a case where no zoom instruction image is displayed, this eliminating processing is not performed.

Description has been made so far regarding the case where a zoom instruction image for instructing a zoom operation is displayed on the display unit 300 to prompt the user to perform a zoom operation. Description will be made below in detail regarding a case where an imaging apparatus automatically performs a zoom operation, with reference to the drawings.

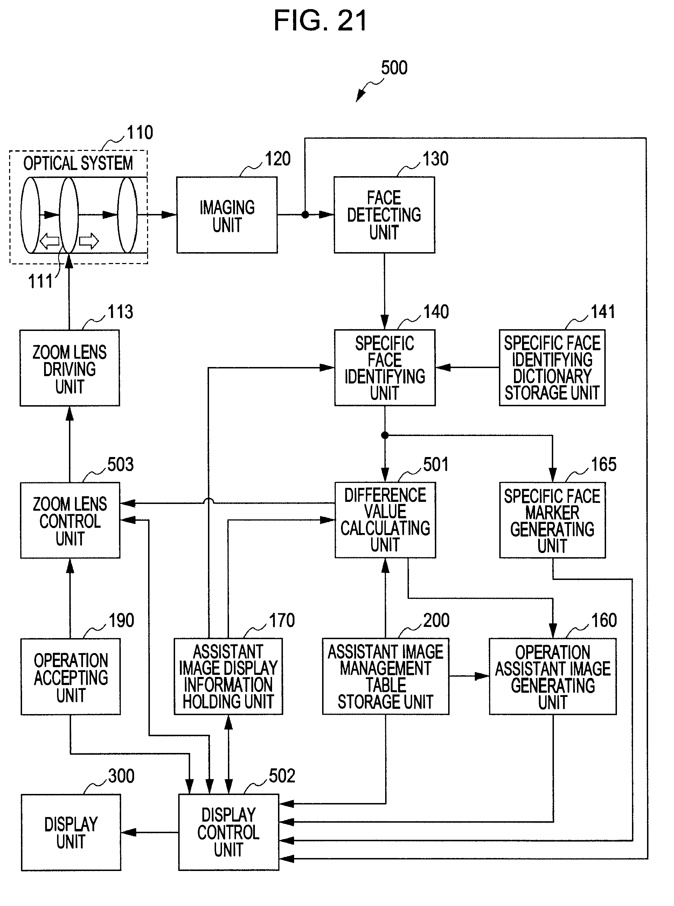

Fig. 21 is a block diagram illustrating a functional configuration example of an imaging apparatus 500 according to an embodiment of the present invention. Here, the imaging apparatus 500 is obtained by transforming a portion of the imaging apparatus 100 shown in Fig. 1, so the configurations other than a difference value calculating unit 501, display control unit 502, and zoom lens control unit 503 are the same as the imaging apparatus 100 shown in Fig. 1. Accordingly, detailed description other than these will be omitted. Also, these configurations will be described below with the different points from the imaging apparatus 100 shown in Fig. 1 as the center.

The difference value calculating unit 501 compares the face image of the specific face identified by the specific face identifying unit 140, and the face region determined with the layout assistant image stored in the assistant image management table storage unit 200 to calculate difference values relating to the positions and sizes of these, and outputs the calculated respective difference values to the operation assistant image generating unit 160 and zoom lens control unit 503.

The display control unit 502 outputs the position and size of the face image of the specific image within the imaged image output from the imaging unit 120 to the zoom lens control unit 503, and upon receiving a notice to the effect that automatic control of the zoom lens is performed from the zoom lens control unit 503, displays an image under a zoom automatic operation which is an operation assistant image to the effect that automatic control of the zoom lens is being performed, in a manner overlaid on an imaged image on the display unit 300.

The zoom lens control unit 503 calculates a zoom magnifying power based on the difference value of the sizes output from the difference value calculating unit 501, calculates the movement direction and movement distance of the zoom lens based on the zoom magnifying power, generates a driving control signal for moving the zoom lens in the movement direction of the zoom lens by an amount equivalent to the movement distance, and outputs this driving control signal to the zoom lens driving unit 113. Here, the zoom lens control unit 503 determines whether or not the calculated movement direction of the zoom lens is the wide-angle side, and in a case where the movement direction of the zoom lens is the wide-angle side, generates a driving control signal for moving the zoom lens in the movement direction of the zoom lens by an amount equivalent to the movement distance worth. On the other hand, in a case where the movement direction of the zoom lens is the telescopic side, the zoom lens control unit 503 calculates an imaging range after movement of the zoom lens based on the calculated zoom magnifying power, compares the imaging range after movement of the zoom lens, and the position and size of the face image of a specific face within the imaged image output from the display control unit 502, thereby determining whether or not the whole face image of the specific face is included in the imaging range after movement of the zoom lens. Subsequently, in a case where the whole face image of the specific face is included in the imaging range after movement of the zoom lens, the zoom lens control unit 503 generates a driving control signal for moving the zoom lens in the calculated movement direction of the zoom lens by the movement distance worth, and outputs a notice to the effect that automatic control of the zoom lens is being performed to the display control unit 502. Note that in a case where the whole face image of the specific face is not included in the imaging range after movement of the zoom lens, the zoom lens control unit 503 does not generate a driving control signal.

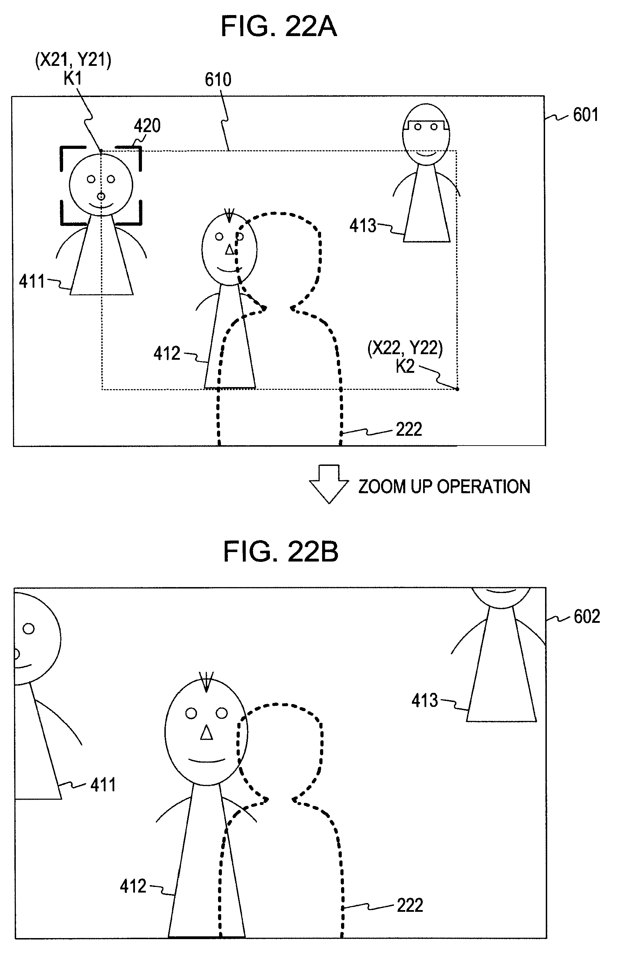

Figs. 22A and 22B are diagrams illustrating an imaged image displayed on the display unit 300 according to the embodiment of the present invention. Note that an imaged image 601 shown in Fig. 22A is the same as the imaged image shown in Fig. 6B. For example, in a case where only the zoom up operation is performed to fit the size of the face of a person 411 shown in Fig. 22A into the size of the face region of a layout assistant image 222, as shown in Fig. 22B, a portion of the face of the person 411 is not included in the imaged image. In this case, there is a case where the face of the person 411 fails to be detected, so there is a possibility that an appropriate operation assistant image may fail to be displayed. Now, the range equivalent to the imaging range of the imaged image 602 shown in Fig. 22B is shown in the imaged image 601 shown in Fig. 22A as the imaging range after zooming up. That is to say, with the imaged image 601 shown in Fig. 22A, in a case where the face of the person 411 is not included in the imaging range 610 after zooming up, if only a zoom up operation is performed, there is a possibility that an appropriate operation assistant image may fail to be displayed. Therefore, with this example, let us say that in a case where the face of a specific person is not included in an imaging range after zooming up, automatic control of the zoom lens is not performed.

Now, the percentage of the area (W11 × H11) of the face image 401 of a specific face is calculated with the area (W1 × H1) determined by the face size of the layout assistant image 222 shown in Fig. 7A as a standard, and a zoom magnifying power is calculated based on this percentage, whereby the imaging range 610 after zooming up can be obtained based on this zoom magnifying power. The imaging range 610 after zooming up obtained based on the zoom magnifying power can be determined with the coordinates (X21, Y21) of a position K1 at the upper left corner, and the coordinates (X22, Y22) of a position K2 at the lower right corner. That is to say, determination is made whether or not the face image 401 of the specific face determined with the center position coordinates (X11, Y11) of the face image 401 of the specific face, and the length H11 in the vertical direction and the length W11 in the horizontal direction is included in the rectangular imaging range 610 after zooming up determined with the coordinates (X21, Y21) of the position K1 at the upper left corner, and the coordinates (X22, Y22) of the position K2 at the lower right corner, and in a case where the whole face image 401 of the specific face is included in the imaging range 610 after zooming up, automatic control of the zoom lens is performed. On the other hand, in a case where the whole face image 401 of the specific face is not included in the imaging range 610 after zooming up, automatic control of the zoom lens is not performed.

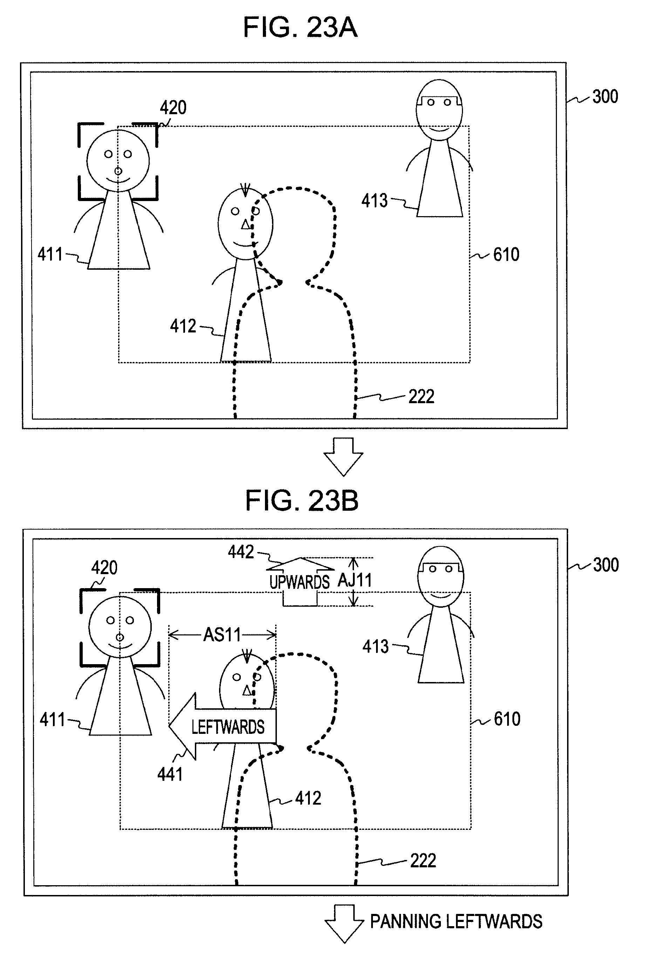

Figs. 23A through 24B are diagrams illustrating a display example of the display unit 300 according to the embodiment of the present invention. Note that the display example shown in Fig. 23A is the same as the display example shown in Fig. 6B. Let us say that the imaging range 610 after zooming up is shown in a rectangular dotted line in Fig. 23A, but this line is not displayed on the display unit 300.

As shown in Fig. 23A, for example, a layout assistant image 222 included in a template A 221 corresponding to the management number "1" held at the management number 172 of the assistant image display information holding unit 170 is displayed in a manner overlaid on an imaged image. Subsequently, based on the difference values calculated in the same way as the calculating method shown in Fig. 7A, as shown in Fig. 23B, a leftwards movement instruction image 441 and upwards movement instruction image 442 are displayed in a manner overlaid on the imaged image. Here, even in a case where the absolute value of the difference value between the area determined with the face size of the layout assistant image 222, and the area of the face image 401 of the specific face is greater than the value of "Z1" stored in the zoom instruction image display threshold 250 corresponding to the "1" of the management number 210, and in a case where the whole face image 401 of the specific face is not included in the imaging range 610 after zooming up, automatic control of the zoom lens is not performed.

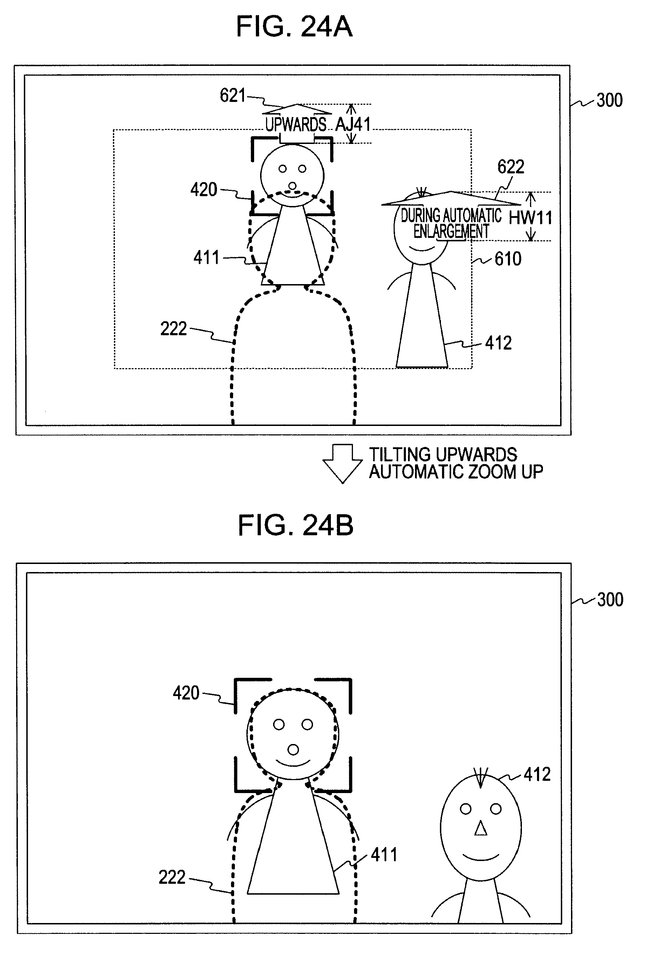

Fig. 24A illustrates a display example after the imaging apparatus 100 is subjected to panning to the left side and tilting to the upper side (the tilting amount to the upper side is a little) by the user in accordance with the leftwards movement instruction image 441 and upwards movement instruction image 442 shown in Fig. 23B. As shown in Fig. 24A, in a case where the absolute value of the difference value S11 in the horizontal direction reaches within the range of the value of "S1" corresponding to the "1" of the management number 210, the leftwards movement instruction image 441 is eliminated. Also, though the imaging apparatus 100 has been subjected to tilting to the upper side by the user, in a case where the absolute value of the difference value J11 in the vertical direction is greater than the value of "J1", an upwards movement instruction image 621 wherein the length of the upwards movement instruction image 442 is reduced is displayed according to the difference value in the vertical direction. Here, in Fig. 24A, the whole face image 401 of the specific face is included in the imaging range 610 after zooming up, so automatic control of the zoom lens is performed. That is to say, a zoom magnifying power is calculated based on the difference value calculated in the same way as the calculating method shown in Fig. 7A, and the zoom lens control unit 503 moves the zoom lens 111 through the zoom lens driving unit 113 based on the zoom magnifying power. Thus, in a case where automatic control of the zoom lens is being performed, as shown in Fig. 24A, an image 622 under a zoom automatic operation is displayed on the display unit 300 in a manner overlaid on the imaged image.

Fig. 24B illustrates a display example after the imaging apparatus 100 is subjected to tilting upwards and automatic control of the zoom lens is performed by the user in accordance with the upwards movement instruction image 621 shown in Fig. 24A. Thus, automatic control of the zoom lens is performed, thereby allowing the user to perform just panning to the left side or tilting to the upper side. Also, in a case where the whole face image of a specific face is not included in an imaging range after zooming up, automatic control of the zoom lens is not performed, whereby the specific face can be prevented from extending out of the range.

Next, description will be made regarding the operation of the imaging apparatus 500 according to the embodiment of the present invention with reference to the drawings.

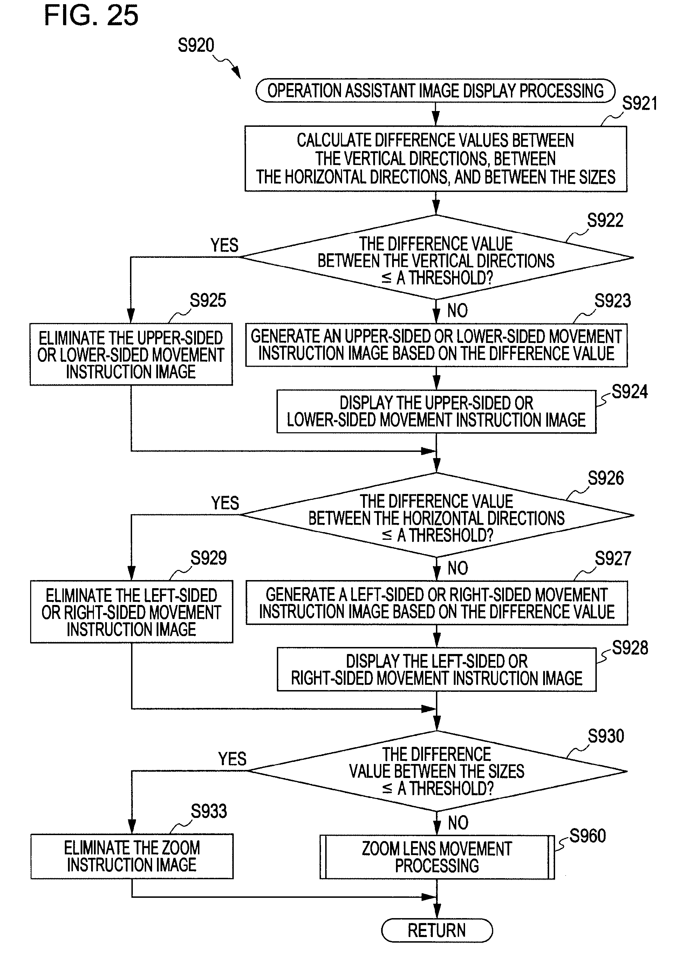

Fig. 25 is a flowchart illustrating an operation assistant image display processing procedure (the processing procedure in step S920 shown in Fig. 15) of the processing procedures of the assistant image display processing by the imaging apparatus 500 according to the embodiment of the present invention. This processing procedure is a modification of the processing procedure shown in Fig. 16, so steps S921 through S930, and S933 shown in Fig. 25 are the same processing procedure as steps S921 through S930, and S933 shown in Fig. 16, and accordingly, description thereof will be omitted here.

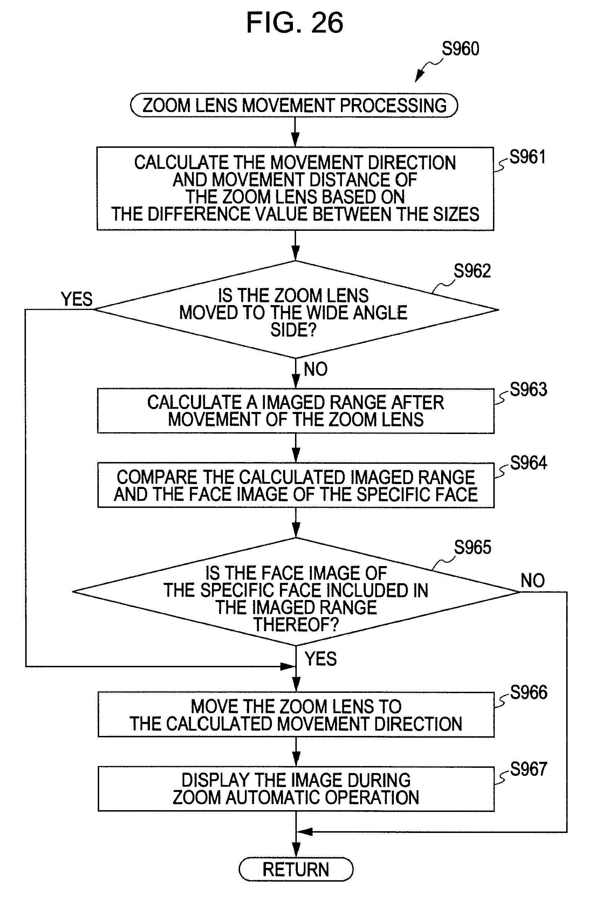

After the display or elimination processing is performed, which relates to an upwards movement instruction image, downwards movement instruction image, leftwards movement instruction image, or rightwards movement instruction image (steps S921 through S929), the operation assistant image generating unit 160 determines whether or not the calculated difference value of the sizes is at or below the zoom instruction image display threshold 250 stored in the assistant image management table storage unit 200 corresponding to the management number stored in the management number 172 of the assistant image display information holding unit 170 (step S930) . Subsequently, in a case where the calculated difference value of the sizes is not at or below the zoom instruction image display threshold 250 (step S930), zoom lens movement processing is performed (step S960) . This zoom lens movement processing will be described in detail with reference to Fig. 26.

Fig. 26 is a flowchart illustrating a zoom lens movement processing procedure (the processing procedure in step S960 shown in Fig. 25) of the processing procedures of the assistant image display processing by the imaging apparatus 500 according to the embodiment of the present invention.

First, the zoom lens control unit 503 calculates a zoom magnifying power based on the calculated difference value of the sizes, and calculates the movement direction and movement distance of the zoom lens based on the zoom magnifying power (step S961). Subsequently, the zoom lens control unit 503 determines whether or not the movement direction of the zoom lens is the wide-angle side (step S962), and in a case where the movement direction of the zoom lens is the wide-angle side, the flow proceeds to step S966. On the other hand, in a case where the movement direction of the zoom lens is the telescopic side (step S962), the zoom lens control unit 503 calculates an imaging range after movement of the zoom lens based on the calculated zoom magnifying power (step S963). Subsequently, the zoom lens control unit 503 compares the calculated imaging range after movement of the zoom lens, and the position and size of the face image of a specific face within the imaged image output from the display control unit 502 (step S964), and determines whether or not the whole face image of the specific face is included in the calculated imaging range after movement of the zoom lens (step S965).

In a case where the whole face image of the specific face is included in the calculated imaging range after movement of the zoom lens (step S965), the zoom lens control unit 503 moves the zoom lens in the calculated movement direction of the zoom lens (step S966), and the display control unit 502 displays the image under a zoom automatic operation on the display unit 300 in a manner overlaid on the imaged image (step S967). With regard to the movement of the zoom lens, it is desirable to move the zoom lens relatively slowly to record an imaged moving image which can be viewed easily at the time of viewing. On the other hand, in a case where the whole face image of the specific face is not included in the calculated imaging range after movement of the zoom lens (step S965), the flow proceeds to step S940.

Description has been made so far regarding examples wherein a human model layout assistant image is displayed, but a layout assistant image other than a human model may be displayed. For example, an arrangement may be made wherein a rectangular image is displayed as a layout assistant image, and the rectangle of a specific face marker is fitted into this rectangle layout assistant image. In this case, for example, an arrangement may be made wherein a rectangular layout assistant image and the rectangle of a specific face marker can be identified with colors or heaviness or the like.

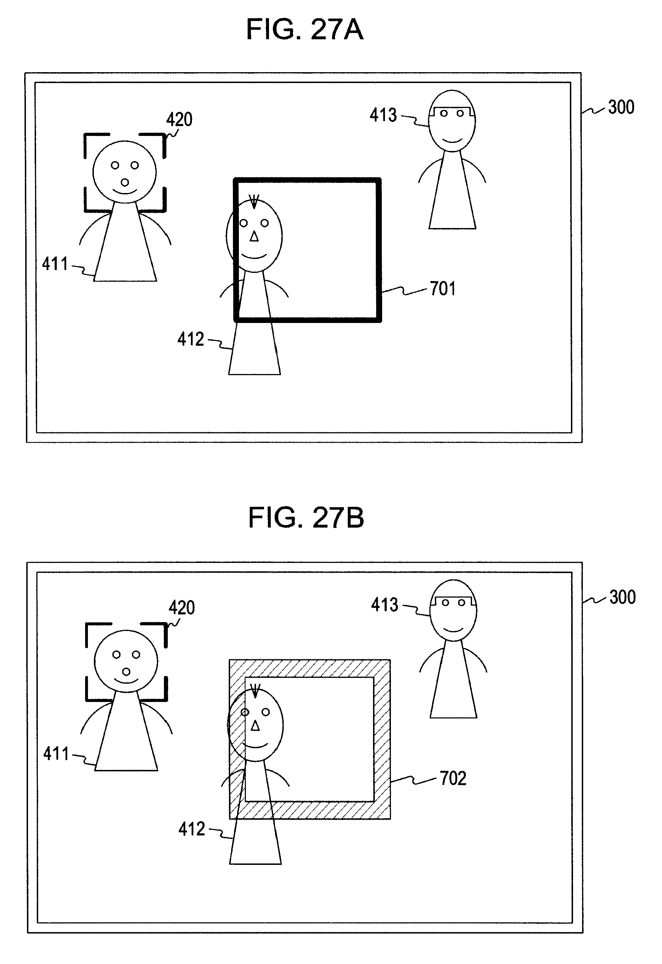

Figs. 27A and 27B are diagrams illustrating a display example of the display unit 300 according to the embodiment of the present invention. Note that the display examples shown in and Figs. 27A and 27B are the same as the display example shown in Fig. 6B except for the layout assistant images. For example, as shown in Fig. 27A, the layout assistant image 701 and specific face marker 420 may be identified by heaviness, solid lines, dotted lines, or the like, or as shown in Fig. 27B, the layout assistant image 701 and specific face marker 420 may be identified by change in colors or transmittance, or the like.

As described above, according to the embodiment of the present invention, a desired person to be shot can be readily recorded with optimal video. Also, the face of a desired person to be shot is automatically identified, and how to shoot the face of the person thereof is guided with an assistant image, whereby a moving image which can be viewed easily at the time of viewing, and enhances the interest of a viewer can be recorded by following this assistant image. For example, in a case where the face of the person 411 specified by the user is moved to the position of the face region of a layout assistant image, the panning, tilting, or zoom operation of the imaging apparatus can be performed while viewing the leftwards movement instruction image, upwards movement instruction image, zoom instruction image, or the like which is displayed on the display unit 300 as well as the layout assistant image.

Also, multiple layout assistant images are displayed sequentially, whereby a moving image which can be viewed easily at the time of viewing, and enhances the interest of a viewer while varying widely can be recorded. For example, with a talent show of a kindergarten, the face of his own child is disposed within an imaged image with an appropriate position and size, the surrounding situation of the face of the child, or the like is recorded as a subject as appropriate so as to prevent the interest of a viewer from decreasing, whereby a moving image which can be viewed easily at the time of viewing, and enhances the interest of a viewer can be recorded. Also, the zoom lens is automatically controlled, whereby a moving image can be readily recorded.

Also, for example, in a case where a specific person is shot from a long distance, and even in the case of looking for the subject of a specific person from a great number of persons, the imaging apparatus itself looks for the specific person, whereby recording of a moving image can be further readily performed.

Also, a moving image which is difficult to view at the time of viewing due to various motions (zoom operation, multiple use of panning, and so forth) during recording of a moving image can be prevented from being recorded. That is to say, a learning opportunity for skillful usage of the imaging apparatus can be provided to the user. Also, an opportunity for even a beginner shooting a moving image which can be viewed easily can be provided. Thus, the imaging apparatus such as a camcorder or the like can be provided as an easy-to-use attractive product.

Note that, with the embodiments of the present invention, relatively simple three types of human model layout assistant images have been described as an example to facilitate description, but various types of layout assistant images may be employed. Also, with the embodiments of the present invention, the example has been described wherein the layout assistant images are displayed in the order of the management numbers, but an arrangement may be made wherein the display order of these is specified by the user beforehand, and the layout assistant images are displayed in this specified order. That is to say, a something like a scenario is created beforehand, whereby a layout assistant image can be switched in accordance with this scenario.

Note that the embodiments of the present invention illustrate an example for carrying out the present invention, but the present invention is not restricted to these embodiments, and various modifications may be made without departing from the essence of the present invention.

In correlation with the Summary of the Invention, the layout assistant image storage unit corresponds to, for example, the assistant image management table storage unit 200, the imaging unit corresponds to, for example, the imaging unit 120, the object detecting unit corresponds to, for example, the face detecting unit 130, the display control unit corresponds to, for example, the display control unit 180 or 502, the specific object identifying unit corresponds to, for example, the specific face identifying unit 140, the specific object marker generating unit corresponds to, for example, the specific face marker generating unit 165, the specific object identifying information storage unit corresponds to, for example, the specific face identifying dictionary storage unit 141, the operation accepting unit corresponds to, for example, the operation accepting unit 190, the difference value calculating unit corresponds to, for example, the difference value calculating unit 150 or 501, the operation assistant image generating unit corresponds to, for example, the operation assistant image generating unit 160, the zoom lens corresponds to, for example, the zoom lens 111, the zoom lens control unit corresponds to, for example, the zoom lens control unit 503, the imaging procedure corresponds to, for example, step S903, the object detecting procedure corresponds to, for example, step S905, and the display control procedure corresponds to, for example, step S904.

Note that the processing procedures described with the embodiments of the present invention may be regarded as a method including these series of procedures, or may be regarded as a program causing a computer to execute these series of procedures, through a recording medium for storing the program thereof.

The present application contains subject matter that disclosed in Japanese Priority Patent Application JP 2008-075096 filed in the Japan Patent Office on March 24, 2008, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. An imaging apparatus comprising:
layout assistant image storage means configured to store a plurality of layout assistant images representing the position and size where an object is to be disposed within an imaging range;
imaging means configured to perform imaging of a subject to generate an imaged image;
object detecting means configured to detect said object from said imaged image, and detect the position and size of the object within said imaged image; and
display control means configured to display a layout assistant image which is one of a plurality of layout assistant images stored in said layout assistant image storage means in a manner overlaid on said imaged image, and in a case where a position difference value which is the difference value between the position of an object determined by said displayed layout assistant image, and a size difference value which is the difference value between the size of an object determined by said displayed layout assistant image and the size of said detected object within said imaged image are both within predetermined ranges, display a layout assistant image other than said displayed layout assistant image of a plurality of layout assistant images stored in said layout assistant image storage means in a manner overlaid on said imaged image.

2. The imaging apparatus according to Claim 1, wherein said display control means display a plurality of layout assistant images stored in said layout assistant image storage means sequentially in accordance with a predetermined order each time said position difference value and said size difference value are both within predetermined ranges.

3. The imaging apparatus according to Claim 1 or 2, further comprising:
specific object identifying means configured to identify whether or not said detected object is a specific object;
wherein said display control means display a layout assistant image other than said displayed layout assistant image in a manner overlaid on said imaged image in a case where said position difference value and said size difference value which relate to said displayed layout assistant image and said identified specific object are both within predetermined ranges.

4. The imaging apparatus according to any of Claims 1 to 3, further comprising:
specific object marker generating means configured to generate a specific object marker to be added to said identified specific object based on the position and size of said identified specific object within said imaged image;
wherein said display control means display a layout assistant image which is one of a plurality of layout assistant images stored in said layout assistant image storage means, and said generated specific object marker in a manner overlaid on said imaged image.

5. The imaging apparatus according to any of Claims 1 to 4, further comprising:
specific object identifying information storage means configured to store a plurality of specific object identifying information for identifying an object, for each object; and
operation accepting means configured to accept a specification operation for specifying at least one object of a plurality of objects in which said specific object identifying information is stored;
wherein said specific object identifying means identify whether or not said detected object is said specific object by employing the specific object identifying information relating to said specified object of a plurality of specific object identifying information stored in said specific object identifying information storage means.

6. The imaging apparatus according to any of Claims 1 to 5, further comprising:
difference value calculating means configured to calculate said position difference value and size difference value; and
operation assistant image generating means configured to generate an operation assistant image for modifying at least one of the position and size of said detected object within said imaged image based on said position difference value and size difference value;
wherein said display control means display a layout assistant image of a plurality of layout assistant images stored in said layout assistant image storage means, and said generated operation assistant image in a manner overlaid on said imaged image.

7. The imaging apparatus according to Claim 6, wherein said difference value calculating means calculate a horizontal position difference value which is the difference value between the position in the horizontal direction of an object determined by said displayed layout assistant image, and the position in the horizontal direction of said detected object within said imaged image, and a vertical position difference value which is the difference between the position in the vertical direction of an object determined by said displayed layout assistant image, and the position in the vertical direction of said detected object within said imaged image, as said position difference values;
and wherein said operation assistant image generating means generate a horizontal direction movement instruction image which is said operation assistant image for modifying the position in the horizontal direction of said detected object within said imaged image in a case where said horizontal position difference value exceeds a horizontal threshold, and in a case where said vertical position difference value exceeds a vertical position threshold, generates a vertical direction movement instruction image which is said operation assistant image for modifying the vertical position of said detected object within said imaged image, and in a case where said size difference value exceeds a size threshold, generates a zoom instruction image which is an operation assistant image for modifying the size of said detected object within said imaged image.

8. The imaging apparatus according to Claim 7, wherein said display control means do not display said zoom instruction image in a case where said horizontal position difference value exceeds said horizontal position threshold, or in a case where said vertical position difference value exceeds said vertical position threshold, and in a case where said horizontal position difference value does not exceed said horizontal position threshold, and said vertical position difference value does not exceed said vertical position threshold, and said size difference value exceeds said size threshold, display said zoom instruction image.

9. The imaging apparatus according to any of Claims 1 to 8, further comprising:
a zoom lens configured to adjust focal length; and
zoom lens control means configured to perform control for driving said zoom lens to modify the size of said detected object within said imaged image based on said size difference value.

10. The imaging apparatus according to Claim 9, wherein said display control means display, in a case where said zoom lens is driven by said zoom lens control means, an operation assistant image to the effect thereof in a manner overlaid on said imaged image.

11. The imaging apparatus according to Claim 9 or 10, wherein said zoom lens control means perform, in a case where a subject included in said imaged image is enlarged by driving of said zoom lens, control for driving said zoom lens only when said detected object is included in the imaged image after enlargement.

12. A control method for an imaging apparatus including layout assistant image storage means configured to store a plurality of layout assistant images representing the position and size where an object is to be disposed within an imaging range, said method comprising the steps of:
imaging of a subject to generate an imaged image;
detecting said object from said imaged image, and detecting the position and size of the object within said imaged image; and
displaying a layout assistant image which is one of a plurality of layout assistant images stored in said layout assistant image storage means in a manner overlaid on said imaged image, and in a case where a position difference value which is the difference value between the position of an object determined by said displayed layout assistant image, and a size difference value which is the difference value between the size of an object determined by said displayed layout assistant image and the size of said detected object within said imaged image are both within predetermined ranges, displaying a layout assistant image other than said displayed layout assistant image of a plurality of layout assistant images stored in said layout assistant image storage means in a manner overlaid on said imaged image.

13. A program causing a computer to execute, with an imaging apparatus including layout assistant image storage means configured to store a plurality of layout assistant images representing the position and size where an object is to be disposed within an imaging range, the steps of:
imaging of a subject to generate an imaged image;
detecting said object from said imaged image, and detecting the position and size of the object within said imaged image; and
displaying a layout assistant image which is one of a plurality of layout assistant images stored in said layout assistant image storage means in a manner overlaid on said imaged image, and in a case where a position difference value which is the difference value between the position of an object determined by said displayed layout assistant image, and a size difference value which is the difference value between the size of an object determined by said displayed layout assistant image and the size of said detected object within said imaged image are both within predetermined ranges, displaying a layout assistant image other than said displayed layout assistant image of a plurality of layout assistant images stored in said layout assistant image storage means in a manner overlaid on said imaged image.
